(19) Europäisches Patentamt
European Patent Office
Office européen des brevets

(11) **EP 4 507 429 A1**

(12) **EUROPEAN PATENT APPLICATION**
published in accordance with Art. 153(4) EPC

(43) Date of publication:
**12.02.2025  Bulletin 2025/07**

(21) Application number: **23794899.7**

(22) Date of filing: **27.03.2023**

(51) International Patent Classification (IPC):
***H04W 72/04*** (2023.01)

(52) Cooperative Patent Classification (CPC):
**H04W 72/04; H04W 72/0446; H04W 72/51**

(86) International application number:
**PCT/CN2023/084009**

(87) International publication number:
**WO 2023/207464 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.04.2022  CN 202210439791**

(71) Applicant: **Huawei Technologies Co., Ltd.
Shenzhen, Guangdong 518129 (CN)**

(72) Inventors:
• **PENG, Xiaohui
  Shenzhen, Guangdong 518129 (CN)**

• **LUO, Jiajin
  Shenzhen, Guangdong 518129 (CN)**
• **ZHOU, Baojian
  Shenzhen, Guangdong 518129 (CN)**
• **CHEN, Yan
  Shenzhen, Guangdong 518129 (CN)**
• **LYU, Yongxia
  Shenzhen, Guangdong 518129 (CN)**
• **YAN, Min
  Shenzhen, Guangdong 518129 (CN)**
• **YANG, Xun
  Shenzhen, Guangdong 518129 (CN)**

(74) Representative: **Grünecker Patent- und
Rechtsanwälte
PartG mbB
Leopoldstraße 4
80802 München (DE)**

(54) **METHOD AND APPARATUS FOR SENDING SENSING SIGNAL AND METHOD AND APPARATUS FOR RECEIVING SENSING SIGNAL**

(57)    Embodiments of this application provide a sensing signal sending method, a sensing signal receiving method, and an apparatus. The method includes: A first communication device determines first time domain resource configuration information based on a speed resolution and a maximum unambiguous speed that are related to a target object, and sends a sensing signal to a second communication device at a plurality of sending moments that are on a time domain resource and that are indicated by the first time domain resource configuration information, so that the second communication device calculates a speed of the target object based on the sensing signal. In this application, the plurality of sending moments that are on the time domain resource and that are for sending the sensing signal are flexibly configured based on the maximum unambiguous speed and the speed resolution that satisfy a sensing requirement of the target object. This helps reduce time domain resource overheads of the sensing signal when requirements of speed measurement ranges and speed resolutions of different target objects are satisfied.

FIG. 5

**Description**

This application claims priority to Chinese Patent Application No. 202210439791.2, filed with the China National Intellectual Property Administration on April 25, 2022 and entitled "SENSING SIGNAL SENDING METHOD, SENSING SIGNAL RECEIVING METHOD, AND APPARATUS", which is incorporated herein by reference in its entirety.

**TECHNICAL FIELD**

Embodiments of this application relate to the field of communication technologies, and in particular, to a sensing signal sending method, a sensing signal receiving method, and an apparatus.

**BACKGROUND**

In a wireless communication system, sensing and speed measurement may be performed on a target object by sending a sensing signal on a time domain resource. Because moving speeds of different target objects are greatly different, sensing requirements of the target objects that need to be satisfied are also different. For example, for a target object moving at a high speed, a moving speed of the target object is high, and a large speed measurement range is usually required, but a speed resolution required by the target object is low. For a target object moving at a low speed, a moving speed of the target object is low, and a high speed resolution is usually required, but a speed measurement range required by the target object is small. For a speed resolution, a greater speed resolution value indicates a lower resolution corresponding to the speed resolution value. On the contrary, a lower speed resolution value indicates a higher resolution corresponding to the speed resolution value.

When sensing and speed measurement are performed on different target objects based on a same sensing signal, a requirement of the large speed measurement range of the target object moving at a high speed needs to be satisfied, and a requirement of the high speed resolution of the target object moving at a low speed needs to be satisfied. As a result, a large quantity of time domain resources need to be consumed for the sensing signal.

Therefore, how to reduce time domain resource overheads of the sensing signal while satisfying requirements of speed measurement ranges and speed resolutions of the different target objects is an urgent problem to be resolved.

**SUMMARY**

Embodiments of this application provide a sensing signal sending method, a sensing signal receiving method, and an apparatus. A plurality of sending moments that are on a time domain resource and that are for sending a sensing signal are flexibly configured based on a maximum unambiguous speed and a speed resolution that correspond to a target object. This helps reduce time domain resource overheads of the sensing signal when requirements of speed measurement ranges and speed resolutions of different target objects are satisfied.

According to a first aspect, a sensing signal sending method is provided, and includes: A first communication device determines first time domain resource configuration information based on a speed resolution and a maximum unambiguous speed, where the first time domain resource configuration information indicates a plurality of sending moments on a time domain resource, the speed resolution and the maximum unambiguous speed are related to a target object, and the first time domain resource configuration information is in one-to-one correspondence with the target object; and

the first communication device sends a sensing signal to a second communication device at the plurality of sending moments.

It should be noted that, that the speed resolution and the maximum unambiguous speed are related to the target object may be understood as that value ranges of the speed resolution and the maximum unambiguous speed are determined based on a sensing requirement of the target object, for example, a speed resolution requirement and a speed measurement requirement that no ambiguity occurs.

It should be further noted that one type of application scenario may correspond to one target object. For example, a target object corresponding to a pedestrian application scenario may be a pedestrian, a target object corresponding to a vehicle application scenario may be a vehicle, and a target object corresponding to an uncrewed aerial vehicle application scenario may be an uncrewed aerial vehicle. Therefore, that the first time domain resource configuration information is in one-to-one correspondence with the target object may be understood as that different types of application scenarios correspond to different target objects, and different target objects correspond to different first time domain resource configuration information.

In this embodiment of this application, the first time domain resource configuration information is determined based on the maximum unambiguous speed and the speed resolution that satisfy the sensing requirement of the target object, and the plurality of sending moments that are on the time domain resource and that are for sending the sensing signal are flexibly configured. This helps reduce time domain resource overheads of the sensing signal when it is ensured that no ambiguity occurs in speed measurement and the speed resolution requirement of the target object is satisfied. In addition, the target object is in one-to-one correspondence with the first time domain resource configuration information. When the target object changes, the time domain resource occupied for sending the sensing signal may be dynamically adjusted based on speed resolutions and maximum unambiguous speeds that correspond to different target objects. This helps satisfy requirements of speed measurement ranges and speed resolutions of the different target objects.

With reference to the first aspect, in some implementations of the first aspect, before the first communication device determines the first time domain resource configuration information based on the speed resolution and the maximum unambiguous speed, the method further includes the following step:

The first communication device receives the speed resolution and the maximum unambiguous speed.

It may be understood that, in this embodiment of this application, the first communication device may receive the speed resolution and the maximum unambiguous speed that correspond to the target object and that are sent by the second communication device, or the first communication device may receive a speed resolution and a maximum unambiguous speed that correspond to the target object and that are sent by a communication device other than the second communication device, for example, a third communication device.

With reference to the first aspect, in some implementations of the first aspect, before the first communication device determines the first time domain resource configuration information based on the speed resolution and the maximum unambiguous speed, the method further includes the following step:

The first communication device determines the speed resolution and the maximum unambiguous speed based on the target object.

In this embodiment of this application, the first communication device may determine, based on a sensing requirement of the target object, the speed resolution and the maximum unambiguous speed that correspond to the target object, so that the first time domain resource configuration information corresponding to the target object can be flexibly configured.

With reference to the first aspect, in some implementations of the first aspect, that the first communication device determines the first time domain resource configuration information based on the speed resolution and the maximum unambiguous speed includes the following steps:

The first communication device determines a maximum time baseline based on the speed resolution;

the first communication device determines a minimum time baseline based on the maximum unambiguous speed; and

the first communication device determines the first time domain resource configuration information based on the minimum time baseline and the maximum time baseline.

In this embodiment of this application, the maximum time baseline is determined based on the speed resolution, so that a speed resolution requirement of the target object can be satisfied, and the minimum time baseline is determined based on the maximum unambiguous speed, so that it is ensured that no ambiguity occurs in speed measurement. Therefore, the first time domain resource configuration information is determined based on the maximum time baseline and the minimum time baseline, and the plurality of sending moments indicated by the first time domain resource configuration information can satisfy requirements of a speed measurement range and the speed resolution of the target object.

With reference to the first aspect, in some implementations of the first aspect, $T_i$ and $T_j$ are any two of the plurality of sending moments, a time baseline $b_{ij}=T_j-T_i$, a time baseline $b_{ji}=T_i-T_j$, $b_{ij}=-b_{ji}$, and i and j are integers.

The time baseline $b_{ij}$ and the time baseline $b_{ji}$ satisfy the following relational expression:

$$k \times \left| b_{min} \right| = \left\{ \left| b_{ij} \right|, \left| b_{ji} \right| \right\},$$

where $1 \leq k \leq N$, and k is an integer; and

$$N = \frac{\left| b_{max} \right|}{\left| b_{min} \right|}$$

$b_{min}$ is a smaller one of the time baseline $b_{ij}$ and the time baseline $b_{ji}$, $b_{max}$ is a larger one of the time baseline $b_{ij}$ and the time baseline $b_{ji}$, and N is an integer greater than 1.

In this embodiment of this application, time baselines formed by the plurality of sending moments on the time domain resource are characterized by complete coverage. This helps improve accuracy of performing sensing and speed measurement on the target object.

With reference to the first aspect, in some implementations of the first aspect, time intervals between any two adjacent sending moments in the plurality of sending moments are not completely the same.

In a possible implementation, the time intervals between any two adjacent sending moments in the plurality of sending moments are the same.

In this embodiment of this application, when the plurality of sending moments are unevenly distributed or evenly distributed on the time domain resource, time baselines formed by the plurality of sending moments can be characterized by complete coverage. This helps improve accuracy of performing sensing and speed measurement on the target object. In addition, when the plurality of sending moments are evenly distributed on the time domain resource, there may be a large quantity of redundant time baselines in the time baselines formed by the plurality of sending moments. Noise measurement between the redundant time baselines is independent of each other. Therefore, a measurement signal-to-noise ratio in sensing and speed measurement can be improved by performing redundancy averaging on the redundant time baselines.

In addition, in comparison with that the plurality of sending moments are evenly distributed on the time domain resource, that the plurality of sending moments are unevenly distributed on the time domain resource helps reduce the quantity of redundant time baselines, and can reduce overheads of the time domain resource used to send the sensing signal.

With reference to the first aspect, in some implementations of the first aspect, before the first communication device sends the sensing signal at the plurality of sending moments, the method further includes the following steps:

The first communication device performs normalization processing on the first time domain resource configuration information to obtain second time domain resource configuration information; and
the first communication device sends the second time domain resource configuration information to the second communication device.

In this embodiment of this application, the first communication device may perform normalization processing on the first time domain resource configuration information and feed back normalized information to the second communication device, so that the second communication device can determine the plurality of sending moments for sending the sensing signal.

According to a second aspect, a sensing signal receiving method is provided, and includes the following steps:

A second communication device receives a sensing signal sent by a first communication device at a plurality of sending moments, where the plurality of sending moments are moments that are on a time domain resource and that are indicated by first time domain resource configuration information, the first time domain resource configuration information is determined based on a speed resolution and a maximum unambiguous speed that are related to a target object, and the first time domain resource configuration information is in one-to-one correspondence with the target object; and
the second communication device senses the target object based on the sensing signal, and calculates a speed of the target object.

It should be noted that, that the speed resolution and the maximum unambiguous speed are related to the target object may be understood as that value ranges of the speed resolution and the maximum unambiguous speed are determined based on a sensing requirement of the target object, for example, a speed resolution requirement and a speed measurement requirement that no ambiguity occurs.

It should be further noted that one type of application scenario may correspond to one target object. For example, a target object corresponding to a pedestrian application scenario may be a pedestrian, a target object corresponding to a vehicle application scenario may be a vehicle, and a target object corresponding to an uncrewed aerial vehicle application scenario may be an uncrewed aerial vehicle. Therefore, that the first time domain resource configuration information is in one-to-one correspondence with the target object may be understood as that different types of application scenarios correspond to different target objects, and different target objects correspond to different first time domain resource configuration information.

In this embodiment of this application, in addition, the target object is in one-to-one correspondence with the first time domain resource configuration information. When there are different target objects, the time domain resource occupied for sending the sensing signal can be dynamically adjusted based on speed resolutions and maximum unambiguous speeds that correspond to different target objects. This helps satisfy requirements of speed measurement ranges and speed resolutions of the different target objects.

In this embodiment of this application, the first time domain resource configuration information is determined based on the maximum unambiguous speed and the speed resolution that satisfy the sensing requirement of the target object, and the plurality of sending moments that are on the time domain resource and that are for sending the sensing signal are flexibly configured. This helps reduce time domain resource overheads of the sensing signal when it is ensured that no ambiguity occurs in speed measurement and the speed resolution requirement of the target object is satisfied. In addition, the target object is in one-to-one correspondence with the first time domain resource configuration information. When the target object changes, the time domain resource occupied for sending the sensing signal may be dynamically adjusted based on the speed resolutions and the maximum unambiguous speeds that correspond to the different target objects. This helps satisfy the requirements of the speed measurement ranges and the speed resolutions of the different target objects.

With reference to the second aspect, in some implementations of the second aspect, before the second communication device receives the sensing signal sent by the first communication device, the method further includes the following step:

The second communication device receives second time domain resource configuration information, where the second time domain resource configuration information is obtained by performing normalization processing on the first time domain resource configuration information.

In this embodiment of this application, the first communication device may perform normalization processing on the first time domain resource configuration information and feed back normalized information to the second communication device, so that the second communication device can determine the plurality of sending moments for sending the sensing signal.

With reference to the second aspect, in some implementations of the second aspect, before the second communication device receives the sensing signal, the method further includes the following steps:

The second communication device determines the speed resolution and the maximum unambiguous speed based on the target object; and
the second communication device sends the speed resolution and the maximum unambiguous speed to the first communication device.

In this embodiment of this application, the second communication device can determine, based on a sensing requirement of the target object, the speed resolution and the maximum unambiguous speed that correspond to the target object, and send the speed resolution and the maximum unambiguous speed to the first communication device, so that the first communication device can flexibly configure the first time domain resource configuration information corresponding to the target object.

According to a third aspect, a sensing signal sending apparatus is provided, and includes:

a processing unit, configured to determine first time domain resource configuration information based on a speed resolution and a maximum unambiguous speed, where the first time domain resource configuration information indicates a plurality of sending moments on a time domain resource, the speed resolution and the maximum unambiguous speed are related to a target object, and the first time domain resource configuration information is in one-to-one correspondence with the target object; and
a sending unit, configured to send a sensing signal to a second communication device at the plurality of sending moments.

With reference to the third aspect, in some implementations of the third aspect, the apparatus further includes a receiving unit.

The receiving unit is configured to receive the speed resolution and the maximum unambiguous speed.

With reference to the third aspect, in some implementations of the third aspect, the processing unit is further configured to:
determine the speed resolution and the maximum unambiguous speed based on the target object.

With reference to the third aspect, in some implementations of the third aspect, the processing unit is specifically configured to:

determine a maximum time baseline based on the speed resolution;
determine a minimum time baseline based on the maximum unambiguous speed; and
determine the first time domain resource configuration information based on the minimum time baseline and the maximum time baseline.

With reference to the third aspect, in some implementations of the third aspect, $T_i$ and $T_j$ are any two of the plurality of sending moments, a time baseline $b_{ij}=T_j-T_i$, a time baseline $b_{ji}=T_i-T_j$, $b_{ij}=-b_{ji}$, and i and j are integers.

The time baseline $b_{ij}$ and the time baseline $b_{ji}$ satisfy the following relational expression:

$$k \times \left| b_{min} \right| = \left\{ \left| b_{ij} \right|, \left| b_{ji} \right| \right\},$$

where $1 \leq k \leq N$, and k is an integer; and

$$N = \frac{\left| b_{max} \right|}{\left| b_{min} \right|}$$

$b_{min}$ is a smaller one of the time baseline $b_{ij}$ and the time baseline $b_{ji}$, $b_{max}$ is a larger one of the time baseline $b_{ij}$ and the time baseline $b_{ji}$, and N is an integer greater than 1.

With reference to the third aspect, in some implementations of the third aspect, time intervals between any two adjacent sending moments in the plurality of sending moments are not completely the same.

With reference to the third aspect, in some implementations of the third aspect,

the processing unit is further configured to perform normalization processing on the first time domain resource configuration information to obtain second time domain resource configuration information; and
the sending unit is further configured to send the second time domain resource configuration information to the second communication device.

According to a fourth aspect, a sensing signal receiving apparatus is provided, and includes:

a receiving unit, configured to receive a sensing signal sent by a first communication device at a plurality of sending moments, where the plurality of sending moments are moments that are on a time domain resource and that are indicated by first time domain resource configuration information, the first time domain resource configuration information is determined based on a speed resolution and a maximum unambiguous speed that are related to a target object, and the first time domain resource configuration information is in one-to-one correspondence with the target object; and
a processing unit, configured to: sense the target object based on the sensing signal, and calculate a speed of the target object.

With reference to the fourth aspect, in some implementations of the fourth aspect, the receiving unit is further configured to:

receive second time domain resource configuration information sent by the first communication device, where the second time domain resource configuration information is obtained by performing normalization processing on the first time domain resource configuration information.

With reference to the fourth aspect, in some implementations of the fourth aspect, the apparatus further includes a sending unit.

The processing unit is further configured to determine the speed resolution and the maximum unambiguous speed based on the target object.

The sending unit is configured to send the speed resolution and the maximum unambiguous speed to the first communication device.

According to a fifth aspect, a sensing signal sending apparatus is provided, and includes a processor. The processor is coupled to a memory. The memory is configured to store a program or instructions. When the program or the instructions are executed by the processor, the apparatus is enabled to perform the method in any possible implementation of the first aspect.

According to a sixth aspect, a sensing signal receiving apparatus is provided, and includes a processor. The processor is coupled to a memory. The memory is configured to store a program or instructions. When the program or the instructions are executed by the processor, the apparatus is enabled to perform the method in any possible implementation of the second aspect.

According to a seventh aspect, a computer-readable storage medium is provided. The computer-readable storage medium stores instructions. When the instructions are run, the method in any possible implementation of the first aspect is implemented, or the method in any possible implementation of the second aspect is implemented.

According to an eighth aspect, a computer program product is provided. When the computer program product runs on a computer, the computer is enabled to perform the method in any possible implementation of the first aspect, or perform the method in any possible implementation of the second aspect.

According to a ninth aspect, a chip is provided, and includes a memory and a processor. The memory is configured to store a computer program. The processor is configured to read and execute the computer program stored in the memory. When the computer program is executed, the processor performs the method in any possible implementation of the first aspect, or performs the method in any possible implementation of the second aspect.

According to a tenth aspect, a communication system is provided. The communication system includes the sensing signal sending apparatus in the third aspect and the sensing signal receiving apparatus in the fourth aspect.

In a possible implementation, the communication system may further include a third communication device, and the third communication device is a network device.

BRIEF DESCRIPTION OF DRAWINGS

FIG. 1 shows a communication system according to an embodiment of this application;
FIG. 2 shows another communication system according to an embodiment of this application;
FIG. 3 shows still another communication system according to an embodiment of this application;
FIG. 4 shows still another communication system according to an embodiment of this application;
FIG. 5 shows a sensing signal sending and receiving method according to an embodiment of this application;
FIG. 6 is a diagram of a solution in which a plurality of sending moments are distributed on a time domain resource according to an embodiment of this application;
FIG. 7 is a diagram of corresponding a quantity of redundant time baselines when the plurality of sending moments are distributed on the time domain resource as shown in FIG. 6;
FIG. 8 is a diagram of another solution in which a plurality of sending moments are distributed on a time domain resource according to an embodiment of this application;
FIG. 9 is a diagram of corresponding a quantity of redundant time baselines when the plurality of sending moments are distributed on the time domain resource as shown in FIG. 8;
FIG. 10 shows a sensing signal sending and receiving method according to an embodiment of this application;
FIG. 11 is a diagram of still another solution in which a plurality of sending moments are distributed on a time domain resource according to an embodiment of this application;
FIG. 12 shows a sensing signal sending and receiving method according to an embodiment of this application;
FIG. 13 shows another sensing signal sending and receiving method according to an embodiment of this application;
FIG. 14 is a block diagram of a sensing signal sending apparatus according to an embodiment of this application;
FIG. 15 is a block diagram of a sensing signal receiving apparatus according to an embodiment of this application; and
FIG. 16 is a diagram of a structure of a sensing signal sending and receiving apparatus according to an embodiment of this application.

**DESCRIPTION OF EMBODIMENTS**

The following describes technical solutions in embodiments of this application with reference to the accompanying drawings.

For ease of understanding of the technical solutions of this application, several basic concepts in this application are first briefly described.

1. Doppler effect:

When there is relative movement between a transmit source and a receiver, a frequency at which the receiver receives information transmitted by the transmit source is different from a frequency at which the transmit source transmits the information, and a difference between the receive frequency and the transmit frequency may be referred to as a Doppler shift.

2. Time baseline:

The time baseline may be understood as a difference between two arbitrary moments, and the two arbitrary moments may form a pair of time baselines. For example, $t_d$ and $t_e$ are two arbitrary moments, and may form a pair of time baselines, where the pair of time baselines may include a time baseline $b_{de}$ and a time baseline $b_{ed}$. The time baseline $b_{de}$ and the time baseline $b_{ed}$ may respectively satisfy the following formulas:

$$b_{de} = t_e - t_d \qquad\qquad \text{Formula (1)}$$

$$b_{ed} = t_d - t_e$$

Formula (2)

In addition, it can be learned from the formula (1) and the formula (2) that $b_{de}=-b_{ed}$.

3. Length of the time baseline:

The length of the time baseline may be understood as a time interval between two arbitrary moments. For example, both a length of the time baseline $b_{de}$ and a length of the time baseline $b_{ed}$ may be a time interval between the two moments $t_d$ and $t_e$.

In addition, in embodiments of this application, for two arbitrary moments, it may be specified that a value obtained by subtracting a value at a later moment from a value at an earlier moment is negative, and a value obtained by subtracting the value at the earlier moment from the value at the later moment is positive. For example, when the moment $t_d$ is before the moment $t_e$, a value of the time baseline $b_{ed}$ is negative, and in this case, the length of the time baseline $b_{ed}$ may be $|b_{ed}|$.

For a plurality of moments, any two of the moments may form a pair of time baselines. A maximum time baseline may be understood as a time baseline with a maximum length in time baselines formed by the plurality of moments, and a minimum time baseline may be understood as a time baseline with a minimum length in the time baselines formed by the plurality of moments.

4. Complete coverage of the time baseline:

A group of moments $[t_1, t_2, t_3, ..., t_M]$ formed by M moments is given, where M is a positive integer. It is assumed that $|b_{min}|$ and $|b_{max}|$ are respectively a length of a minimum time baseline and a length of a maximum time baseline in time baselines formed by the M moments, and the length of the maximum time baseline is L times the length of the minimum time baseline, that is, $|b_{max}| = L|b_{min}|$, where L is a positive integer greater than 1. If time baselines with a length of $p|B_{min}|$ can be formed by the moments in $[t_1, t_2, t_3, ..., t_M]$, where $1 \leq p \leq L$, and p is an integer, it is considered that time baselines formed by the group of moments $[t_1, t_2, t_3, ..., t_M]$ are characterized by complete coverage.

The technical solutions in embodiments of this application may be applied in various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th Generation, 5G) system, or a new radio (New Radio, NR) system.

In recent years, a wireless sensing technology attracts wide attention in the academic field. In the wireless sensing technology, changes of a radio signal are analyzed during propagation to obtain a feature of signal propagation space (for example, a channel) and sense a scenario. The foregoing scenario may include a human factor, for example, whether there is a person and a location, a posture, or an action of the person, or may include another external object factor, for example, a building or a moving vehicle. As one of the most classic wireless sensing methods, a radar is widely used in the military field, the agriculture field, the meteorological field, and another field. A basic principle of the radar is that a transmitter transmits a specific waveform signal, where the waveform signal is received by a receiver through a radio channel. The radar performs signal processing with reference to a transmit signal and a receive signal, to extract a target of interest in the radio channel, so as to sense the target.

A main function of a wireless communication system is to exchange information between the transmitter and the receiver. A basic principle of the wireless communication system is also that a transmitter transmits a specific waveform signal, where the waveform signal is received by a receiver through a radio channel, and a signal transmitted by the transmitter is adjusted after signal processing.

From the perspective of a whole physical process of transmitting, transmission, and reception, a process of the radar is extremely similar to that of the wireless communication system. Therefore, a wireless communication technology and the wireless sensing technology (for example, represented by the radar) may be combined into one, so that a surrounding environment can be sensed while communication is implemented, in other words, integrated sensing and communication is implemented.

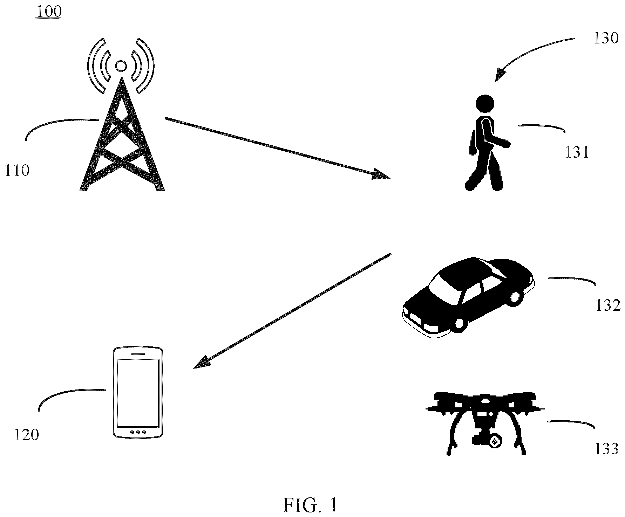

In view of the foregoing content, an embodiment of this application provides a communication system 100 applicable to integrated sensing and communication. As shown in FIG. 1, the communication system 100 may include a transmit end device 110, a receive end device 120, and a target object 130. The transmit end device 110 and the receive end device 120 may be communicatively connected. The transmit end device 110 may be configured to send a sensing signal, and the receive end device 120 may be configured to receive the sensing signal sent by the transmit end device 110, to perform sensing.

In addition, the transmit end device 110 and the receive end device 120 may each be either a terminal device or a network device. This is not limited in this application. For example, the target object 130 may be a pedestrian 131, a vehicle 132, or an uncrewed aerial vehicle 133. It may be understood that the foregoing examples are merely intended to describe the technical solutions in this application more clearly, but are not intended to limit this application.

The terminal device in embodiments of this application may be referred to as user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device with a wireless communication function, a computing device, another processing device connected to a wireless modem, a vehicle-mounted device, a wearable device, a terminal device in a future 5G network, a terminal device in a future evolved public land mobile network (Public Land Mobile Network, PLMN), or the like. A specific form of the terminal device is not limited in this application.

The network device in embodiments of this application may be a device configured to communicate with the terminal device. The network device may be a network device (Base Transceiver Station, BTS) in a global system for mobile communications (Global System for Mobile communications, GSM) or a code division multiple access (Code Division Multiple Access, CDMA) system, a network device (NodeB, NB) in a wideband code division multiple access (Wideband Code Division Multiple Access, WCDMA) system, an evolved network device (Evolved NodeB, eNB or eNodeB) in an LTE system, or a radio controller in a cloud radio access network (Cloud Radio Access Network, CRAN) scenario. Alternatively, the network device may be a relay node, an access point, a vehicle-mounted device, a wearable device, a network device in a future 5G network, a network device in a future evolved PLMN network, or the like. This is not limited in this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems for implementing service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by the terminal device or a server, or a functional module that is in the terminal device or the server and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage component (for example, a hard disk, a floppy disk, or a magnetic tape), an optical disc (for example, a compact disc (compact disc, CD), or a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage medium" may include but is not limited to a radio channel, and various other media that can store, include, and/or carry instructions and/or data.

It should be noted that the communication system 100 shown in FIG. 1 is merely intended to describe the technical solutions in this application more clearly, and does not constitute a limitation on this application. A person of ordinary skill in the art may know that, with evolution of a network architecture and emergence of a new service scenario, the technical solutions provided in this application are also applicable to similar technical problems.

As shown in FIG. 1, in the communication system 100, the transmit end device 110 may send a sensing signal on a time domain resource, so that the receive end device 120 can sense a surrounding environment or a target based on the sensing signal. For example, when the communication system 100 is a cellular system or an NR system, to detect channel quality, the transmit end device 110 may send a channel state information (channel state information, CSI) signal to measure a channel. From the perspective of a physical process, the channel is actually affected by a surrounding environment. In a sense, channel measurement is a sensing manner.

For another example, in the communication system 100, when the target object 130 needs to be sensed to measure a moving speed of the target object 130, the transmit end device 110 may send a sensing signal on a time domain resource, and the sensing signal may pass through the target object 130 and be received by the receive end device 120. The receive end device 120 may sense the target object 130 based on the received sensing signal, to calculate the moving speed of the target object 130.

In the foregoing process, because moving speeds of different target objects 130 vary greatly, sensing requirements of the target objects that need to be satisfied are also different. For example, for a target object 130 moving at a high speed, a moving speed of the target object 130 is high, and a large speed measurement range is usually required, but a speed resolution required by the target object 130 is low. For a target object 130 moving at a low speed, a moving speed of the target object 130 is low, and a high speed resolution is usually required, but a speed measurement range required by the target object 130 is small. For a speed resolution, a greater speed resolution value indicates a lower resolution corresponding to the speed resolution value. On the contrary, a lower speed resolution value indicates a higher resolution corresponding to the speed resolution value.

For example, when the target object 130 is the pedestrian 131 moving at a low speed, a required speed measurement range may be [-5, 5] m/s, to be specific, a maximum unambiguous speed corresponding to the target object 130 may be $\pm 5$ m/s, and a minimum value of a required speed resolution may be 0.2 m/s. Alternatively, when the target object 130 is the vehicle 132, a required speed measurement range may be [-20, 20] m/s, to be specific, a maximum unambiguous speed corresponding to the target object 130 may be $\pm 20$ m/s, and a minimum value of a required speed resolution may be 0.8 m/s. Alternatively, when the target object 130 is the uncrewed aerial vehicle 133 moving at a high speed, a required speed measurement range may be [-30, 30] m/s, to be specific, a maximum unambiguous speed corresponding to the target object 130 may be $\pm 30$ m/s, and a minimum value of a required speed resolution may be 1.2 m/s.

It may be understood that, in this embodiment of this application, a positive value and a negative value of the moving speed may be respectively understood as that the target object 130 moves towards and away from the receive end device 120. It should be noted that a moving direction of the target object 130 is merely an example, and is not a limitation on this application.

In conclusion, when speed measurement is performed on different target objects 130 based on a same sensing signal, a requirement of the large speed measurement range of the target object 130 moving at a high speed needs to be satisfied, and a requirement of the high speed resolution of the target object 130 moving at a low speed needs to be satisfied. As a result, a large quantity of time domain resources need to be consumed for the sensing signal.

For example, in the foregoing example, the sensing signal needs to satisfy a requirement that a speed measurement range is [-30, 30] m/s, and also needs to satisfy a requirement that a minimum value of a speed resolution is 0.2 m/s. As a result, a large quantity of time domain resources need to be occupied for the sensing signal. For example, a larger speed measurement range of the target object 130 indicates higher density of the sensing signal on the time domain resource, and consequently, more time domain resources are occupied for the sensing signal.

To resolve the foregoing problem, an embodiment of this application provides a sensing signal sending and receiving method. According to the method, a plurality of sending moments that are on a time domain resource and that are for sending a sensing signal can be flexibly configured based on a maximum unambiguous speed and a speed resolution that correspond to a target object. This helps reduce time domain resource overheads of the sensing signal when requirements of speed measurement ranges and speed resolutions of different target objects are satisfied.

The sensing signal sending and receiving method provided in this embodiment of this application may be applied to the communication system 100 shown in FIG. 1. In the communication system 100, speed resolutions and maximum unambiguous speeds that correspond to different target objects may be determined by a control end device. The control end device may be a same device as a transmit end device 110, or may be a same device as a receive end device 120, or may be a device other than the transmit end device 110 and the receive end device 120.

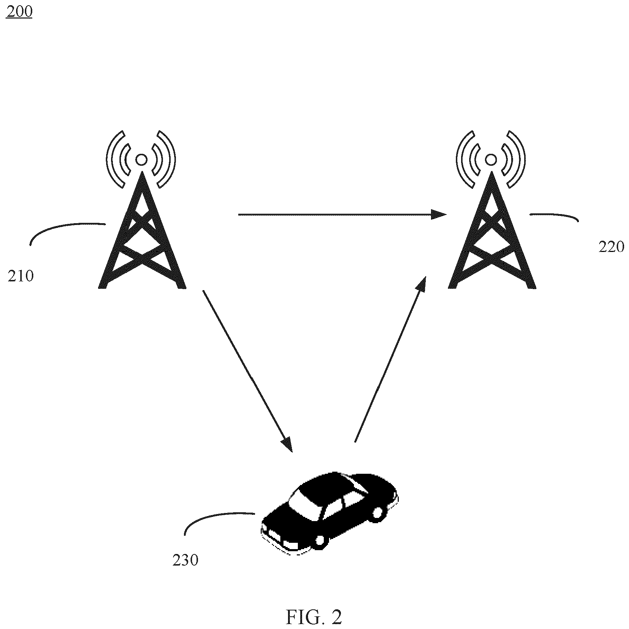

With reference to FIG. 2 to FIG. 4, the following specifically describes communication systems provided in embodiments of this application in the foregoing three different cases. It should be noted that in embodiments of this application, a first communication device is the transmit end device 110 shown in FIG. 1, and a second communication device is the receive end device 120 shown in FIG. 1.

FIG. 2 shows an example of a communication system 200 provided in an embodiment of this application when the control end device and the transmit end device 110 are a same device. As shown in FIG. 2, the communication system 200 may include a first communication device 210, a second communication device 220, and a target object 230. The first communication device 210 may be a network device, and the second communication device 220 may be a network device or a terminal device. This is not limited in this application. The target object 230 may be the target object 130 shown in FIG. 1. In the communication system 200, the target object 230 is sensed by using a sensing signal sent by the first communication device 210.

In addition, the first communication device 210 may alternatively be used as the control end device in the communication system 200. In other words, the first communication device 210 may be configured to determine a speed resolution and a maximum unambiguous speed that correspond to the target object 230. Optionally, the first communication device 210 may be further configured to trigger the second communication device 220 to enable a sensing function.

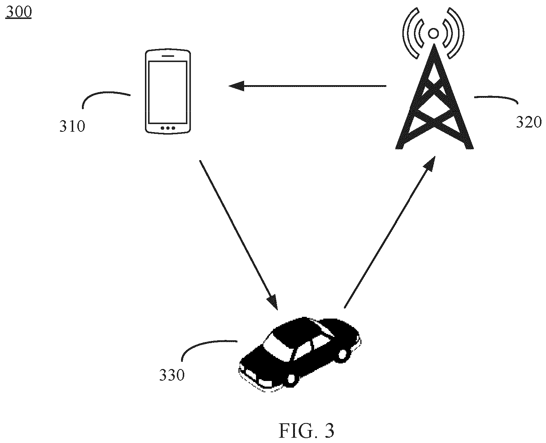

FIG. 3 shows an example of a communication system 300 provided in an embodiment of this application when the control end device and the receive end device 120 are a same device. As shown in FIG. 3, the communication system 300 may include a first communication device 310, a second communication device 320, and a target object 330. The second communication device 320 is a network device, and the first communication device 310 may be a network device or a terminal device. This is not limited in this application. The target object 330 may be the target object 130 shown in FIG. 1. In the communication system 300, the target object 330 is sensed by using a sensing signal sent by the first communication device 310.

In addition, the second communication device 320 may alternatively be used as the control end device in the communication system 300. In other words, the second communication device 320 may be configured to determine a speed resolution and a maximum unambiguous speed that correspond to the target object 330, and may send the speed resolution and the maximum unambiguous speed to the first communication device 310. Optionally, the second communication device 320 may be further configured to trigger the first communication device 310 to enable a sensing function.

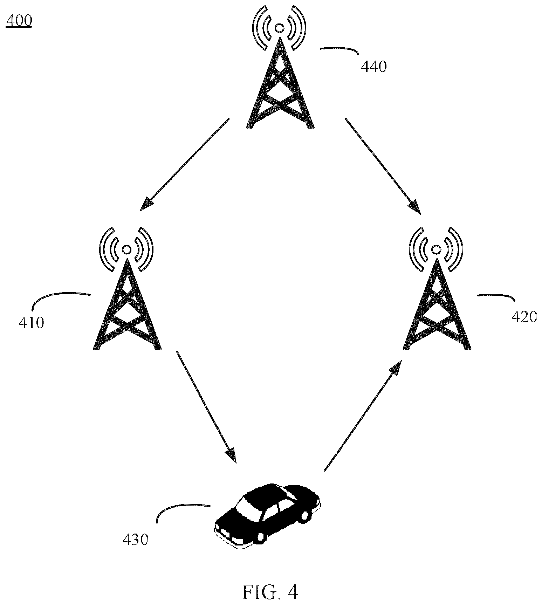

FIG. 4 shows an example of a communication system 400 provided in an embodiment of this application when the control end device is a device other than the transmit end device 110 and the receive end device 120. As shown in FIG. 4, the communication system 400 may include a first communication device 410, a second communication device 420, a target object 430, and a third communication device 440. The third communication device 440 is a network device, and the first communication device 410 and the second communication device 420 may each be either a terminal device or a network device. This is not limited in this application. The target object 430 may be the target object 130 shown in FIG. 1. In the communication system 400, the target object 430 is sensed by using a sensing signal sent by the first communication device 410.

In addition, the third communication device 440 is used as the control end device in the communication system 400. In other words, the third communication device 440 may be configured to determine a speed resolution and a maximum unambiguous speed that correspond to the target object 430, and may send the speed resolution and the maximum unambiguous speed to the first communication device 410. Optionally, the third communication device 440 may be further configured to trigger the first communication device 410 and the second communication device 420 to enable a sensing function.

For better understanding of the sensing signal sending and receiving method provided in this embodiment of this application, the following describes a basic principle of sensing and speed measurement in this embodiment of this application.

Specifically, when sensing and speed measurement need to be performed on a target object, a first communication device may send a sensing signal, and the sensing signal may be received by a second communication device after being reflected by the target object. In the foregoing process, because the target object moves relative to the second communication device, there is a Doppler effect in the sensing signal received by the second communication device. The Doppler effect may be specifically reflected as that a frequency at which the second communication device receives the sensing signal changes relative to a frequency at which the first communication device sends the sensing signal, and a Doppler shift corresponding to the Doppler effect may satisfy the following formula:

$$f_d = -\frac{f}{c}\frac{d(R_{tx}+R_{rx})}{dt} \qquad \text{Formula (3)}$$

$f_d$ is the Doppler shift, f is an operating carrier corresponding to the sensing signal, c is a propagation speed of light, $R_{tx}$ is a distance between the first communication device and the target object, $R_{rx}$ is a distance between the second communication device and the target object, and $\dfrac{d(R_{tx}+R_{rx})}{dt}$ is a relative moving speed of the target object.

Based on the formula (3), it is further deduced that the Doppler shift $f_d$ satisfies the following formula:

$$f_d = -\frac{f}{c}\frac{\Delta R}{\Delta t} = -f\frac{\Delta \tau}{\Delta t} = -\frac{\Delta \phi}{2\pi \Delta t} \qquad \text{Formula (4)}$$

$\Delta R$ is a change value of $R_{tx}+R_{rx}$ within time $\Delta t$, $\Delta \tau$ is a delay change caused by movement of the target object within the time $\Delta t$, and $\Delta \phi$ is a phase change caused by movement of the target object within the time $\Delta t$.

It can be learned from the formula (4) that, the Doppler shift $f_d$ is determined by the phase change $\Delta\phi$ caused by movement of the target object within the time $\Delta t$. For example, when $\Delta t$ is a time interval between a moment $t_g$ and a moment $t_h$, and the moment $t_g$ is before the moment $t_h$, it may be deduced based on the formula (2) that the phase change $\Delta\phi_{gh}$ caused by movement of the target object within the time $\Delta t$ may satisfy the following formula:

$$\Delta\phi_{gh} = -2\pi(t_h - t_g)f_d \qquad \text{Formula (5)}$$

It can be learned from the formula (5) that, when the Doppler shift $f_d$ is determined, the phase change $\Delta\phi_{gh}$ is related only to the time interval ($t_h$-$t_g$). It is assumed that there are three moments $t_1$, $t_2$, and $t_3$ that are evenly distributed in sequence on a time domain resource, where the moment $t_1$ and the moment $t_2$ may form a pair of time baselines, and the pair of time baselines may include a time baseline $b_{12}$ and a time baseline $b_{21}$. It may be deduced based on the formula (1) that the time baseline $b_{12}$=$t_2$-$t_1$, and the time baseline $b_{21}$=$t_1$-$t_2$. In addition, the moment $t_2$ and the moment $t_3$ may also form a pair of time baselines, and the pair of time baselines may include a time baseline $b_{23}$ and a time baseline $b_{32}$. It may be deduced based on the formula (1) that the time baseline $b_{23}$=$t_3$-$t_2$, and the time baseline $b_{32}$=$t_2$-$t_3$.

Because the moments t1, t2, and t3 are evenly distributed in sequence, $t_2$-$t_1$=$t_3$-$t_2$, in other words, the time baseline $b_{12}$ is the same as the time baseline $b_{23}$. In this case, there is a redundant time baseline. In a physical sense, a result of phase difference measurement performed by sending a sensing signal at the moment $t_1$ and the moment $t_2$ is the same as a result of phase difference measurement performed by sending the sensing signal at the moment $t_2$ and the moment $t_3$. For a group of moments [$t_1$, $t_2$, $t_3$, ..., $t_M$] formed by M moments, M(M-1) time baselines may be formed in total. However, because there may be some redundant time baselines in the time baselines, a quantity m of non-redundant time baselines may be less than M(M-1), that is, m<M(M-1). M is a positive integer.

During application of sensing and speed measurement, a speed resolution and a maximum unambiguous speed are two important parameters, and the two parameters are closely related to a baseline length of a time baseline. For example, for the group of moments [t1, t2, t3, ..., $t_M$] formed by the M moments, the M moments are evenly distributed on the time domain resource, and the M moments are arranged in sequence. In other words, for any two moments $t_i$ and $t_j$ in the M moments, when j>i, the moment $t_j$ is after the moment $t_i$, that is, $t_j$-$t_i$>0. In this case, in the M(M-1) time baselines formed by the M moments, a minimum time baseline may be $b_{12}$, and a maximum time baseline may be $b_{1M}$. It may be deduced based on the formula (1) that the minimum time baseline $b_{12}$=$t_2$-$t_1$, and the maximum time baseline $b_{1M}$=$t_M$-$t_1$. It may be further deduced with reference to the formula (5) that a phase change $\Delta\phi_{12}$ corresponding to the minimum time baseline $b_{12}$ and a phase change $\Delta\phi_{1M}$ corresponding to the maximum time baseline $b_{1M}$ respectively satisfy the following formula (6) and formula (7):

$$\Delta\phi_{12} = -2\pi b_{12} f_d \qquad \text{Formula (6)}$$

$$\Delta\phi_{1M} = -2\pi b_{1M} f_d \qquad \text{Formula (7)}$$

It can be learned from the formula (6) and the formula (7) that, when the Doppler shift $f_d$ changes by $\Delta f_d$, because $b_{1M}$>$b_{12}$, a change value of $\Delta\phi_{1M}$ is greater than a change value of $\Delta\phi_{12}$. In other words, a larger length of the time baseline indicates that the time baseline is more sensitive to a change of the Doppler shift $f_d$, and indicates a higher measured Doppler resolution. However, when the phase change value exceeds a range of 0 to $2\pi$, phase ambiguity may occur, and the phase ambiguity may cause speed measurement ambiguity. For example, when the extracted phase change is $\pi/3$, an actual phase change may be $2l\pi+\pi/3$, where l is an integer.

Therefore, for the foregoing M moments, to ensure that the speed measurement ambiguity does not occur, in other words, to ensure that a speed measurement range satisfies a requirement of sensing and speed measurement, a time baseline $b_{ij}$ formed by any two moments $t_i$ and $t_j$ in the M moments satisfies the following formula:

$$2\pi b_{ij} f_d < 2\pi \qquad \text{Formula (8)}$$

$b_{ij}$ is the time baseline formed by the moment $t_i$ and the moment $t_j$, $b_{ij}$=$t_j$-$t_i$, and the moment $t_j$ is after the moment $t_i$.

It may be further deduced based on the formula (8) that,

$$f_d < 1/b_{ij} \qquad \text{Formula (9)}$$

It may be obtained with reference to the formula (9) that, a larger length of the time baseline $b_{ij}$ indicates a higher speed resolution and a lower maximum unambiguous speed of the time baseline $b_{ij}$; and a smaller length of the time baseline $b_{ij}$ indicates a lower speed resolution and a higher maximum unambiguous speed of the time baseline $b_{ij}$. Because different target objects correspond to different speed resolutions and maximum unambiguous speeds, time baselines with different lengths may be combined to perform sensing and speed measurement on the different target objects. A time baseline with a small length may be used to satisfy a requirement of a maximum unambiguous speed of a target object, in other words, it can be ensured that speed measurement ambiguity does not occur. A time baseline with a large length may be used to satisfy a requirement of a speed resolution of the target object.

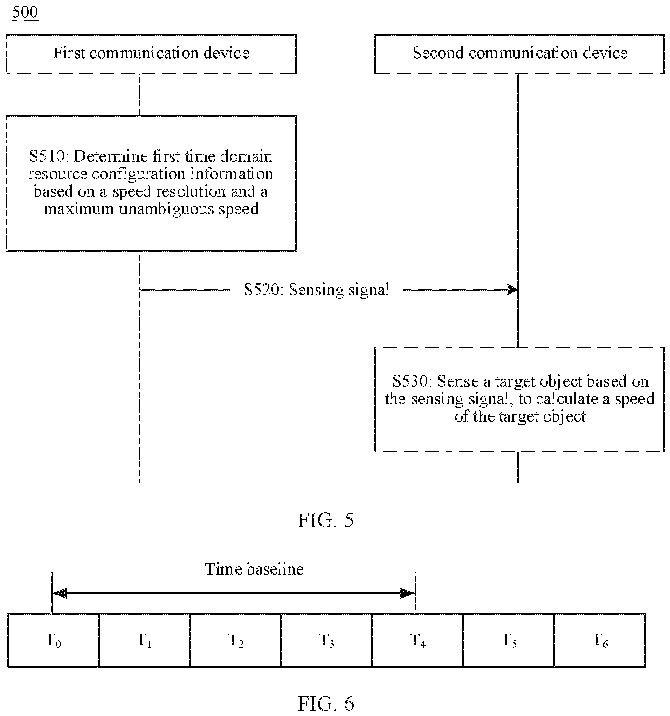

With reference to FIG. 5 to FIG. 9, the following describes a method 500 for sending and receiving a sensing signal provided in embodiments of this application. The method 500 may be applied to the communication systems shown in FIG. 1 to FIG. 4.

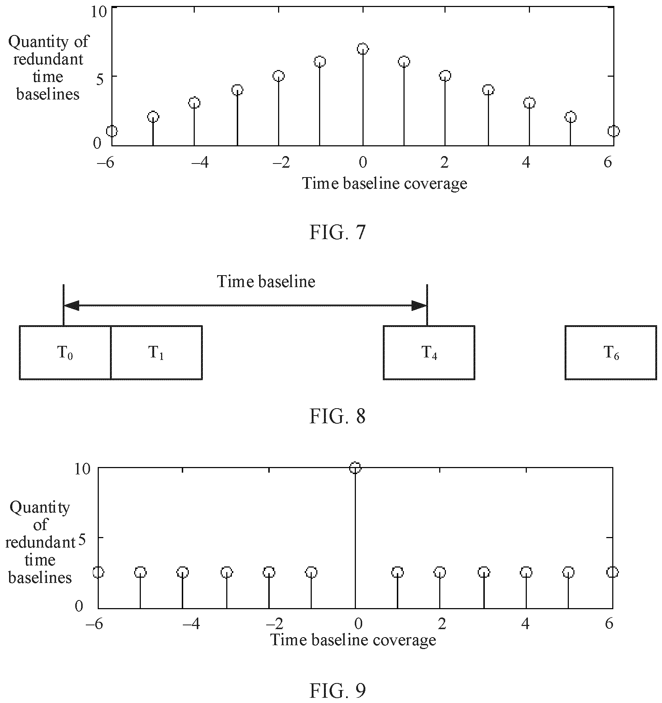

FIG. 5 is a schematic flowchart of the method 500 for sending and receiving a sensing signal according to an embodiment of this application. FIG. 6 and FIG. 8 are respectively diagrams of distribution solutions of a plurality of sending moments on a time domain resource that are determined according to the method 500. FIG. 7 and FIG. 9 are respectively diagrams of a quantity of redundant time baselines that correspond to the diagrams of the distribution solutions of the plurality of sending moments shown in FIG. 6 and FIG. 8.

As shown in FIG. 5, the method 500 may include the following steps.

S510: A first communication device determines first time domain resource configuration information based on a speed resolution and a maximum unambiguous speed, where the first time domain resource configuration information indicates a plurality of sending moments on a time domain resource. The speed resolution and the maximum unambiguous speed are related to a target object, and the first time domain resource configuration information is in one-to-one correspondence with the target object.

Specifically, that the speed resolution and the maximum unambiguous speed are related to the target object may be understood as that value ranges of the speed resolution and the maximum unambiguous speed are determined based on a sensing requirement of the target object, for example, a speed resolution requirement and a speed measurement requirement that no ambiguity occurs. After a target object on which sensing and speed measurement are to be performed is determined, based on the foregoing principle content of sensing and speed measurement, the first communication device may determine, based on a speed resolution and a maximum unambiguous speed that satisfy a sensing requirement of the target object, first time domain resource configuration information corresponding to the target object, to be specific, determine a plurality of sending moments that are on a time domain resource corresponding to the target object and that are used to send a sensing signal.

It should be noted that one type of application scenario may correspond to one target object. For example, a target object corresponding to a pedestrian application scenario may be a pedestrian, a target object corresponding to a vehicle application scenario may be a vehicle, and a target object corresponding to an uncrewed aerial vehicle application scenario may be an uncrewed aerial vehicle. Therefore, that the first time domain resource configuration information is in one-to-one correspondence with the target object may be understood as that different types of application scenarios correspond to different target objects, and different target objects correspond to different first time domain resource configuration information.

In a possible example, the first communication device may determine a maximum time baseline based on the speed resolution corresponding to the target object, and determine a minimum time baseline based on the maximum unambiguous speed corresponding to the target object.

The maximum time baseline may satisfy the following formula:

$$\left| b_{max} \right| = \frac{c}{f_c \Delta V} \hspace{4cm} \text{Formula (10)}$$

$b_{max}$ is the maximum time baseline, $|b_{max}|$ is a length of the maximum time baseline, c is the speed of light, $f_c$ is an operating carrier corresponding to the sensing signal, and $\Delta V$ is the speed resolution of the target object.

The minimum time baseline may satisfy the following formula:

$$\left| b_{min} \right| = \frac{c}{2 f_c V_{max}} \hspace{4cm} \text{Formula (11)}$$

$b_{min}$ is the minimum time baseline, $|b_{min}|$ is a length of the minimum time baseline, c is the speed of light, $f_c$ is the operating carrier corresponding to the sensing signal, and $V_{max}$ is the maximum unambiguous speed of the target object.

After the length of the maximum time baseline and the length of the minimum time baseline are obtained through calculation based on the formula (10) and the formula (11), the first communication device may determine the first time domain resource configuration information based on the length of the maximum time baseline and the length of the minimum time baseline.

In a possible example, manners in which the first communication device determines the first time domain resource configuration information based on the maximum time baseline and the minimum time baseline may include the following two manners.

In one manner, the length of the maximum time baseline and the length of the minimum time baseline may be used as constraint conditions to perform real-time search, and select the first time domain resource configuration information that satisfies the constraint conditions. However, this manner may be time-consuming.

In another manner, the first time domain resource configuration information may be calculated based on the length of the maximum time baseline and the length of the minimum time baseline, and then real-time search is performed in a table lookup and search manner. This manner takes less time and helps save computing resources.

For example, an algorithm for searching for the first time domain resource configuration information may be an exhaustive attack method, a simulated annealing algorithm, or ant colony optimization. This is not limited in this application.

In some embodiments, in addition to determining the first time domain resource configuration information based on the speed resolution and the maximum unambiguous speed of the target object, the first communication device may further determine the first time domain resource configuration information on a premise of ensuring that time baselines are characterized by complete coverage. In other words, time baselines formed by the plurality of sending moments that are on the time domain resource and that are indicated by the first time domain resource configuration information are characterized by complete coverage.

Specifically, $T_i$ and $T_j$ may be any two of the plurality of sending moments indicated by the first time domain resource configuration information, and i and j are integers. The sending moment $T_i$ and the sending moment $T_j$ may form a time baseline $b_{ij}$ and a time baseline $b_{ji}$. The time baseline $b_{ij}=T_j-T_i$, the time baseline $b_{ji}=T_i-T_j$, and $b_{ij}=-b_{ji}$. Because the time baselines formed by the plurality of sending moments are characterized by complete coverage, the time baseline $b_{ij}$ and the time baseline $b_{ji}$ may satisfy the following relational expression:

$$k \times \left|b_{min}\right| = \left\{\left|b_{ij}\right|, \left|b_{ji}\right|\right\} \qquad \text{Formula (12)}$$

$$N = \frac{\left|b_{max}\right|}{\left|b_{min}\right|} \qquad \text{Formula (13)}$$

$0 \le k \le N$, and k is an integer. $b_{min}$ is a smaller one of the time baseline $b_{ij}$ and the time baseline $b_{ji}$, and $\left|b_{min}\right|$ is a length of the minimum time baseline $b_{min}$. $b_{max}$ is a larger one of the time baseline $b_{ij}$ and the time baseline $b_{ji}$, $\left|b_{max}\right|$ is a length of the maximum time baseline $b_{max}$, and N is an integer greater than 1.

It can be learned from the formula (12) and the formula (13) that, time baselines with a length of $k\left|b_{min}\right|$ can be formed by the plurality of sending moments, in other words, the time baselines formed by the plurality of sending moments are characterized by complete coverage.

For example, when the first time domain resource configuration information needs to be determined on the premise of ensuring that the time baselines are characterized by complete coverage, the first communication device may perform real-time search by using the length of the maximum time baseline, the length of the minimum time baseline, and complete coverage of the time baselines as constraint conditions, and select the first time domain resource configuration information that satisfies the constraint conditions. Alternatively, the first communication device may calculate the first time domain resource configuration information based on the length of the maximum time baseline, the length of the minimum time baseline, and complete coverage of the time baselines.

In some embodiments, the plurality of sending moments may be evenly distributed on the time domain resource to ensure complete coverage of the time baselines. In other words, time intervals between any two adjacent sending moments in the plurality of sending moments are the same.

In a possible example, FIG. 6 is a diagram in which a plurality of sending moments are evenly distributed on a time domain resource. As shown in FIG. 6, seven sending moments $[T_0, T_1, T_2, T_3, T_4, T_5, T_6]$ are evenly distributed on the time domain resource, in other words, time intervals between adjacent sending moments are the same. In addition, the sending moment $T_1$ may be after the sending moment $T_0$, the sending moment $T_2$ may be after the sending moment $T_1$, and so on. A length of a minimum time baseline $b_{min}$ in time baselines formed by the seven sending moments may be a time interval between any two adjacent sending moments, for example, $\left|b_{min}\right| = \left|T_1 - T_0\right|$. A length of a maximum time baseline $b_{max}$ formed by the seven sending moments may be a time interval between the sending moment $T_0$ and the sending moment $T_6$, that is, $\left|b_{max}\right| = \left|T_6 - T_0\right|$, and $\left|b_{max}\right| = 6\left|b_{min}\right|$. Based on the formula (13), in this case, $k\left|b_{min}\right|$ may be [-6, -5, -4, -3, -2, -1, 1, 2, 3, 4, 5, 6]$b_{min}$, and time baselines with a length of $k|b_{min}|$ can be formed by the foregoing seven sending moments. For example, $-6b_{min} = b_{60} = T_0 - T_6$, $-5b_{min} = b_{50} = T_0 - T_5$, $-4b_{min} = b_{40} = T_0 - T_4$, $-3b_{min} = b_{63} = T_3 - T_6$, $-2b_{min} = b_{64} = T_4 - T_6$, $-1b_{min} = b_{21} = T_1 - T_2$, $|b_{min}| = b_{12} = T_2 - T_1$, $2b_{min} = b_{46} = T_6 - T_4$, $3b_{min} = b_{36} = T_6 - T_3$, $4b_{min} = b_{04} = T_4 - T_0$, $5b_{min} = b_{05} = T_5 - T_0$, and $6b_{min} = b_{06} = T_6 - T_0$. In other words, time baselines formed by the sending moments $[T_0, T_1, T_2, T_3, T_4, T_5, T_6]$ are characterized by complete coverage.

FIG. 7 is a diagram of corresponding time baseline coverage and a corresponding quantity of redundant time baselines when the plurality of sending moments are evenly distributed on the time domain resource as shown in FIG. 6. As shown in FIG. 7, when time baseline coverage is 0, a corresponding time baseline may be a 0 time baseline, to be specific, a time baseline formed by subtracting any moment in the seven sending moments from the moment itself, for example, $T_1 - T_1$, $T_2 - T_2$, or $T_3 - T_3$. In addition, when time baseline coverage is 0, a corresponding redundant quantity of time baselines may be 7. When time baseline coverage is 3, a corresponding time baseline may be a time baseline $b_{03}$, a time baseline $b_{14}$, a time baseline $b_{25}$, or a time baseline $b_{36}$. $b_{03} = T_3 - T_0$, $b_{14} = T_4 - T_1$, $b_{25} = T_5 - T_2$, and $b_{36} = T_6 - T_3$. Because the seven sending moments are evenly distributed, the time baseline $b_{03}$, the time baseline $b_{14}$, the time baseline $b_{25}$, and the time baseline $b_{36}$ are the same. In other words, when time baseline coverage is 4, there are four same time baselines, and a corresponding redundant quantity of time baselines is 4. When time baseline coverage is -4, a corresponding time baseline may be a time baseline $b_{62}$, a time baseline $b_{51}$, or a time baseline $b_{40}$. $b_{62} = T_2 - T_6$, $b_{51} = T_5 - T_1$, and $b_{40} = T_0 - T_4$. Similar to the case in which time baseline coverage is 3, the time baseline $b_{62}$, the time baseline $b_{51}$, or the time baseline $b_{40}$ are the same. In other words, when time baseline coverage is -4, there are three same time baselines, and a corresponding redundant quantity of time baselines is 3. A case in which time baseline coverage is another value is similar to the foregoing case. To avoid repetition, details are not described herein again.

It may be understood that the time baselines formed by the seven sending moments $[T_0, T_1, T_2, T_3, T_4, T_5, T_6]$ that are evenly distributed on the time domain resource are characterized by complete coverage. However, there are a large quantity of redundant time baselines in the time baselines formed by the seven sending moments, and information obtained through the redundant time baselines is the same. In one aspect, this does not help reduce time domain resource overheads. In another aspect, noise measurement between the redundant time baselines is independent of each other. Therefore, a measurement signal-to-noise ratio in sensing and speed measurement can be improved by performing redundancy averaging on the redundant time baselines.

In some other embodiments, the plurality of sending moments may alternatively be unevenly distributed on the time domain resource to ensure complete coverage of the time baselines. In other words, time intervals between any two adjacent sending moments in the plurality of sending moments may not be completely the same.

In a possible example, FIG. 8 is a diagram in which a plurality of sending moments are unevenly distributed on a time domain resource. As shown in FIG. 8, $[T_0, T_1, T_4, T_6]$ in the seven sending moments shown in FIG. 6 are selected to send a sensing signal. A time interval between the sending moment $T_4$ and the sending moment $T_1$ may be three times a time interval between the sending moment $T_1$ and the sending moment $T_0$, and a time interval between the sending moment $T_6$ and the sending moment $T_4$ may be two times a time interval between the sending moment $T_1$ and the sending moment $T_0$. Similar to the embodiment shown in FIG. 6, in time baselines formed by the four sending moments, a length of a minimum time baseline $b_{min}$ is $|b_{min}| = |T_1 - T_0|$, a length of a maximum time baseline is $|b_{max}| = |T_6 - T_0|$, and $|b_{max}| = 6|b_{min}|$. Based on the formula (13), in this case, $k|b_{min}|$ may also be $[-6, -5, -4, -3, -2, -1, 1, 2, 3, 4, 5, 6]b_{min}$, and time baselines with a length of $k|b_{min}|$ can be formed by the foregoing four sending moments. For example, $-6b_{min} = b_{60} = T_0 - T_6$, $-5b_{min} = b_{61} = T_1 - T_6$, $-4b_{min} = b_{40} = T_0 - T_4$, $-3b_{min} = b_{41} = T_1 - T_4$, $-2b_{min} = b_{64} = T_4 - T_6$, $-1b_{min} = b_{10} = T_0 - T_1$, $1b_{min} = b_{01} = T_1 - T_0$, $2b_{min} = b_{46} = T_6 - T_4$, $3b_{min} = b_{14} = T_4 - T_1$, $4b_{min} = b_{04} = T_4 - T_0$, $5b_{min} = b_{16} = T_6 - T_1$, and $6b_{min} = b_{06} = T_6 - T_0$. In other words, the time baselines formed by the sending moments $[T_0, T_1, T_4, T_6]$ are characterized by complete coverage.

FIG. 9 is a diagram of corresponding time baseline coverage and a corresponding redundant quantity of time baselines when the plurality of sending moments are unevenly distributed on the time domain resource as shown in FIG. 8. As shown in FIG. 9, when time baseline coverage is 0, a corresponding time baseline may be a 0 time baseline, to be specific, a time baseline formed by subtracting any moment in the four sending moments from the moment itself. In this case, a corresponding redundant quantity of time baselines may be 4. When time baseline coverage is 3, a corresponding time baseline is a time baseline $b_{14}$. $b_{14} = T_4 - T_1$. When time baseline coverage is -4, a corresponding time baseline is a time baseline $b_{40}$. $b_{40} = T_0 - T_4$. A case in which time baseline coverage is another value is similar to the foregoing case. To avoid repetition, details are not described herein again.

It may be understood that the time baselines formed by the four sending moments $[T_0, T_1, T_4, T_6]$ that are unevenly distributed on the time domain resource may be also characterized by complete coverage. In addition, there is a redundant time baseline in the time baselines formed by the four sending moments only when time baseline coverage is 0, and there is no redundancy time baseline in the time baselines when time baseline coverage is another value. In comparison with that the plurality of sending moments are evenly distributed on the time domain resource shown in FIG. 6 and FIG. 7, in this case, a quantity of redundant time baselines is greatly reduced.

In conclusion, in this embodiment of this application, when the plurality of sending moments are unevenly distributed or evenly distributed on the time domain resource, the time baselines formed by the plurality of sending moments can be characterized by complete coverage. This helps improve accuracy of performing sensing and speed measurement on the target object. However, in comparison with that the plurality of sending moments are evenly distributed on the time domain resource, that the plurality of sending moments are unevenly distributed on the time domain resource helps reduce the quantity of redundant time baselines. This can reduce a quantity of time domain resources, and reduce overheads of the time domain resource used to send the sensing signal.

For example, to enable the plurality of sending moments indicated by the first time domain resource configuration information to be unevenly distributed on the time domain resource to reduce time domain resource overheads, the first communication device may perform real-time search by using the length of the maximum time baseline, the length of the minimum time baseline, and complete coverage of the time baselines as constraint conditions and by using the sensing signal occupying a minimum quantity of time domain resources as an optimization objective, and select the first time domain resource configuration information that satisfies the constraint conditions. Alternatively, the first communication device may calculate the first time domain resource configuration information based on the length of the maximum time baseline, the length of the minimum time baseline, the complete coverage of the time baselines, and the sensing signal occupying a minimum quantity of time domain resources.

S520: The first communication device sends a sensing signal to a second communication device at the plurality of sending moments.

Specifically, after determining the plurality of corresponding sending moments based on the speed resolution and the maximum unambiguous speed of the target object, the first communication device may send the sensing signal to the second communication device at the plurality of sending moments, so that the second communication device can perform sensing and speed measurement on the target object based on the received sensing signal.

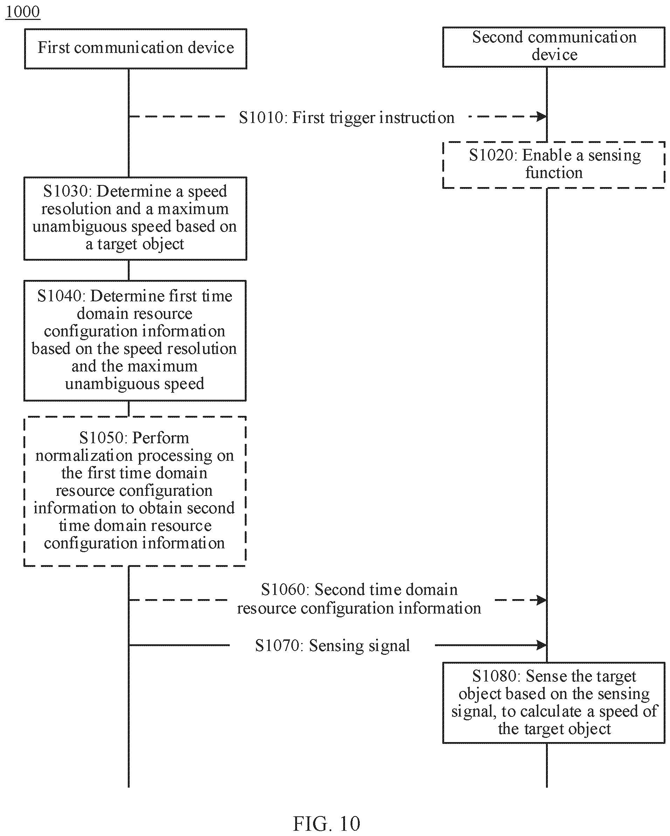

In some embodiments, before sending the sensing signal to the second communication device at the plurality of sending moments, the first communication device may send content of the first time domain resource configuration information to the second communication device. For detailed descriptions of a sending manner, refer to embodiments shown in FIG. 10 to FIG. 12. Details are not described herein again in this application.

S530: The second communication device may sense the target object based on the sensing signal, to calculate a speed of the target object.

After receiving the sensing signal sent at the plurality of sending moments, the second communication device may sense the target object based on the sensing signal, to calculate the speed of the target object.

It may be understood that different target objects correspond to different speed resolutions and maximum unambiguous speeds. For example, when the target object is an uncrewed aerial vehicle, a speed resolution of the target object may be 1.8 m/s, and a maximum unambiguous speed may be $\pm 40$ m/s. When the target object is a city vehicle, a speed resolution of the target object may be 1 m/s, and a maximum unambiguous speed may be $\pm 20$ m/s.

In this embodiment of this application, the first time domain resource configuration information is determined based on the maximum unambiguous speed and the speed resolution that satisfy the sensing requirement of the target object, and the plurality of sending moments that are on the time domain resource and that are for sending the sensing signal are flexibly configured. This helps reduce time domain resource overheads of the sensing signal when it is ensured that no ambiguity occurs in speed measurement and the speed resolution requirement of the target object is satisfied. In addition, the target object is in one-to-one correspondence with the first time domain resource configuration information. When the target object changes, the time domain resource occupied for sending the sensing signal may be dynamically adjusted based on the speed resolutions and the maximum unambiguous speeds that correspond to the different target objects. This helps satisfy requirements of speed measurement ranges and speed resolutions of the different target objects.

It should be noted that, when the method 500 is applied to the communication systems shown in FIG. 1 to FIG. 4, the speed resolutions and the maximum unambiguous speeds that correspond to the different target objects may be determined by a control end device in the communication system. Optionally, the control end device may be the first communication device or the second communication device, or may be a communication device other than the first communication device and the second communication device, for example, a third communication device. This is not limited in this application.

With reference to FIG. 10 to FIG. 12, the following specifically describes a sensing signal sending and receiving method provided in embodiments of this application in the foregoing three different cases.

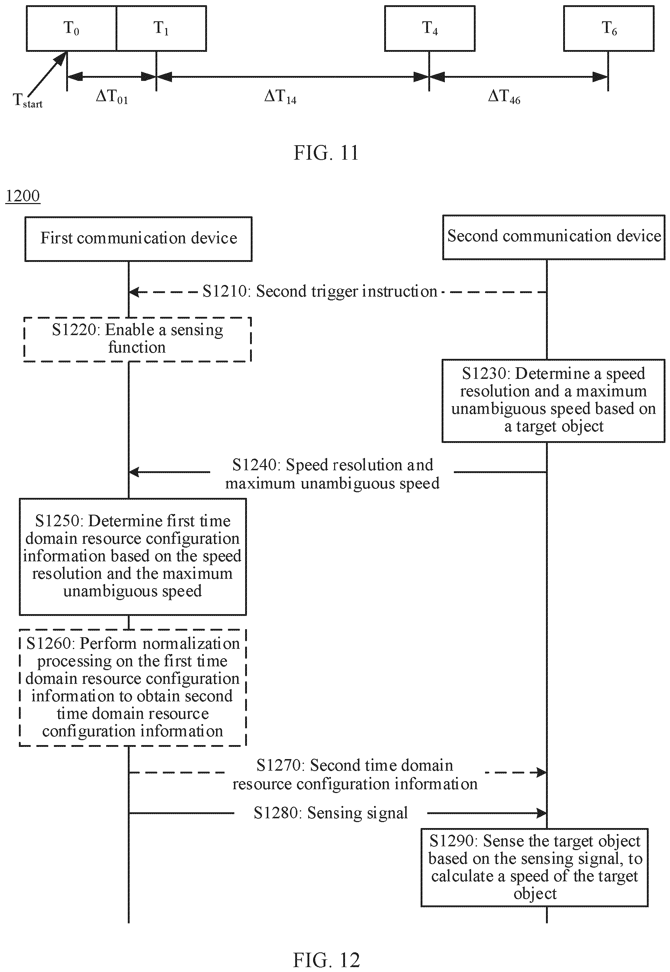

FIG. 10 is a schematic flowchart of a method 1000 for sending and receiving a sensing signal according to an embodiment of this application. FIG. 11 is a diagram in which a plurality of sending moments are distributed on a time domain resource according to an embodiment of this application. The method 1000 may be applied to a communication system in which a first communication device is used as a control end device, for example, may be applied to the communication system shown in FIG. 2.

As shown in FIG. 10, the method 1000 may include the following steps.

S1010: The first communication device sends a first trigger instruction to a second communication device.

Specifically, before performing sensing and speed measurement on a target object, the first communication device, used as the control end device, may send the first trigger instruction to the second communication device, to instruct the second communication device to enable a sensing function.

S1020: The second communication device enables the sensing function.

After receiving the first trigger instruction, the second communication device enables the sensing function in response to an indication of the first trigger instruction.

Optionally, in the method 1000, S1010 and S1020 may not be performed. In this case, the second communication device may preset to enable the sensing function. This is not limited in this application.

S1030: The first communication device determines a speed resolution and a maximum unambiguous speed based on the target object.

Specifically, when sensing and speed measurement need to be performed, the first communication device may pre-determine a target object on which speed measurement is to be performed, to determine, based on a sensing requirement of the target object, a speed resolution and a maximum unambiguous speed that correspond to the target object. For example, when determining that the target object is an uncrewed aerial vehicle, the first communication device may determine that a speed resolution corresponding to the target object is 1.8 m/s, and a maximum unambiguous speed is $\pm 40$ m/s.

S1040: The first communication device determines first time domain resource configuration information based on the speed resolution and the maximum unambiguous speed, where the first time domain resource configuration information indicates a plurality of sending moments on a time domain resource. The speed resolution and the maximum unambiguous speed are related to the target object, and the first time domain resource configuration information is in one-to-one correspondence with the target object.

Specifically, step S1040 is the same as step S510. For detailed descriptions, refer to the embodiment shown in FIG. 5. To avoid repetition, details are not described in this application again.

S1050: The first communication device performs normalization processing on the first time domain resource configuration information to obtain second time domain resource configuration information.

In a possible example, when the target object on which speed measurement is to be performed is an uncrewed aerial vehicle, a center frequency of a radio signal of the target object may be 3.5 GHz, a corresponding speed resolution is 1.8 m/s, and a maximum unambiguous speed is $\pm 40$ m/s. A length of a maximum time baseline $|b_{max}| \approx 47.6190$ ms and a length of a minimum time baseline $|b_{min}| \approx 1.0714$ ms are obtained through calculation based on the foregoing formula (10) and formula (11). Considering that in 4G and 5G NR systems, a length of a frame may be 1 ms, for ease of scheduling, both the length of the maximum time baseline and the length of the minimum time baseline are set to an integer multiple of 1 ms. To be specific, the length of the maximum time baseline $|b_{max}|$ may be set to 50 ms, and the length of the minimum time baseline $|b_{min}|$ may be set to 1 ms. In this way, it can be ensured that no ambiguity occurs in speed measurement, and a resolution of speed measurement is not lower than 1.8 m/s.

The length $|b_{max}|$ of the maximum time baseline is 50 ms, the length $|b_{min}|$ of the minimum time baseline is 1 ms, and first time domain resource configuration information that satisfies the sensing requirement of the target object on which speed measurement is to be performed may be obtained on the premise that time baselines are characterized by complete coverage. A group of sending moments that are on a time domain resource and that are indicated by the first time domain resource configuration information may be [0, 1, 3, 6, 13, 20, 27, 34, 41, 42, 49, 50]. Then, a minimum value of a time interval between any two adjacent sending moments in the foregoing sending moments is used as a normalized time interval, that is, the normalized time interval is 1 ms, and normalization processing is performed on the first time domain resource configuration information to obtain the second time domain resource configuration information. In this case, sending moments indicated by the second time domain resource configuration information may be represented as [0, 1, 3, 6, 13, 20, 27, 34, 41, 42, 49, 50].

In some embodiments, a plurality of sending moments indicated by the second time domain resource configuration information obtained through normalization processing may be represented as $\{T_{start}, \Delta T_{min}, \Delta T_{ij}/\Delta T_{min}\}$. $T_{start}$ is a start moment in the plurality of sending moments, $\Delta T_{min}$ is a minimum value of a time interval between any two adjacent sending moments in the plurality of sending moments, $\Delta T_{ij}$ is a time interval between any two sending moments $T_i$ and $T_j$ in the plurality of sending moments, and the sending moment $T_j$ is after the sending moment $T_i$. For example, as shown in FIG. 11, $T_{start}$ is a sending moment $T_0$, $\Delta T_{min}$ is a time interval between the sending moment $T_0$ and a sending moment $T_1$, that is, $\Delta T_{01}$. $\Delta T_{ij}$ may be $\Delta T_{01}$, $\Delta T_{14}$, or $\Delta T_{46}$.

Based on the foregoing content, the sending moments [0, 1, 3, 6, 13, 20, 27, 34, 41, 42, 49, 50] after the normalization processing may be represented as {0, 1 ms, 1, 2, 3, 7, 7, 7, 7, 7, 4, 4, 1}.

In another possible example, when the target object on which speed measurement is to be performed is a city vehicle, a speed resolution corresponding to the target object may be 1 m/s, and a maximum unambiguous speed is $\pm 20$ m/s. A length of a maximum time baseline $|b_{max}| \approx 85.7143$ ms and a length of a minimum time baseline $|b_{min}| \approx 2.1429$ ms are obtained through calculation based on the foregoing formula (10) and formula (11). Considering that in 4G and 5G NR systems, a length of a frame may be 1 ms, for ease of scheduling, both the length of the maximum time baseline and the length of the minimum time baseline are also set to an integer multiple of 1 ms. To be specific, the length of the maximum

time baseline $|b_{max}|$ may be set to 86 ms, and the length of the minimum time baseline $|b_{min}|$ may be set to 2 ms. In this case, sending moments indicated by the second time domain resource configuration information obtained through normalization processing may be represented as [0, 1, 3, 6, 13, 20, 27, 34, 38, 42, 43], and a corresponding normalized time interval is 2 ms. Further, the sending moments [0, 1, 3, 6, 13, 20, 27, 34, 38, 42, 43] may be represented as {0, 2 ms, 1, 2, 3, 7, 7, 7, 7, 4, 4,1}.

In still another possible example, when the target object on which speed measurement is to be performed is a pedestrian, a speed resolution corresponding to the target object is 0.2 m/s, and a maximum unambiguous speed is $\pm 5$ m/s. A length of a maximum time baseline $|b_{max}| \approx 428.5714$ ms and a length of a minimum time baseline $|b_{min}| \approx 8.5714$ ms are obtained through calculation based on the foregoing formula (10) and formula (11). Considering that in 4G and 5G NR systems, a length of a frame may be 1 ms, for ease of scheduling, the length of the maximum time baseline $|b_{max}|$ may be set to 432 ms, and the length of the minimum time baseline $|b_{min}|$ may be set to 9 ms. In this case, the sending moments indicated by the second time domain resource configuration information obtained through normalization processing may be represented as [0, 1, 3, 6, 13, 20, 27, 34, 38, 42, 43, 47, 48], and a corresponding normalized time interval is 9 ms. Further, the sending moments [0, 1, 3, 6, 13, 20, 27, 34, 38, 42, 43, 47, 48] may be represented as {0, 9 ms, 1, 2, 3, 7, 7, 7, 7, 4, 4, 1, 4, 3}.

It may be understood that the foregoing manner of performing normalization processing on the first time domain resource configuration information is merely an example, and is not a limitation on this application.

S1060: The first communication device sends the second time domain resource configuration information to the second communication device.

In some embodiments, when the first communication device determines the first time domain resource configuration information in a real-time search manner, the first communication device may send the second time domain resource configuration information to the second communication device by using radio resource control (radio resource control, RRC) signaling, downlink control (downlink control information, DCI) signaling, or a feedback channel specially used for sensing. This is not limited in this application.

Optionally, when the first communication device determines the first time domain resource configuration information through calculation in a table lookup and search manner, S1050 and S1060 may not be performed in the method 1000. In this case, the first communication device and the second communication device may preset a correspondence table, and the correspondence table includes a correspondence between an index identifier and the first time domain resource configuration information. The first communication device only needs to send an index identifier corresponding to the first time domain resource configuration information to the second communication device, and the second communication device directly determines the first time domain resource configuration information in the correspondence table based on the index identifier. This helps reduce resource overheads. The index identifier may be referred to as a sensing time pattern index (sensing time pattern index, STPI).

S1070: The first communication device sends a sensing signal to the second communication device at the plurality of sending moments.

S1080: The second communication device may sense the target object based on the sensing signal, to calculate a speed of the target object.

Specifically, step S1070 and step S1080 are the same as step S520 and step S530. For detailed descriptions, refer to the embodiment shown in FIG. 5. To avoid repetition, details are not described in this application again.

In this embodiment of this application, the first communication device may be used as a control device. The first communication device may determine, based on the sensing requirement of the target object on which sensing and speed measurement is to be performed, the speed resolution and the maximum unambiguous speed that correspond to the target object, so that the first time domain resource configuration information corresponding to the target object can be flexibly configured.

FIG. 12 is a schematic flowchart of a method 1200 for sending and receiving a sensing signal according to an embodiment of this application. The method 1200 may be applied to a communication system in which a second communication device is used as a control end device, for example, may be applied to the communication system shown in FIG. 3.

As shown in FIG. 12, the method 1200 may include the following steps.

S1210: The second communication device sends a second trigger instruction to a first communication device.

Specifically, before performing sensing and speed measurement on a target object, the second communication device, used as the control end device, may send the second trigger instruction to the first communication device, to instruct the first communication device to enable a sensing function.

S1220: The first communication device enables the sensing function.

After receiving the second trigger instruction, the first communication device enables the sensing function in response to an indication of the second trigger instruction.

Optionally, in the method 1200, S1210 and S1220 may not be performed. In this case, the first communication device may preset to enable the sensing function. This is not limited in this application.

S1230: The second communication device determines a speed resolution and a maximum unambiguous speed based on the target object.

Specifically, for step S1230, refer to the related descriptions of S1030 in the embodiment shown in FIG. 10. To avoid repetition, details are not described herein again.

S1240: The second communication device sends the speed resolution and the maximum unambiguous speed to the first communication device.

S1250: The first communication device determines first time domain resource configuration information based on the speed resolution and the maximum unambiguous speed, where the first time domain resource configuration information indicates a plurality of sending moments on a time domain resource. The speed resolution and the maximum unambiguous speed are related to the target object, and the first time domain resource configuration information is in one-to-one correspondence with the target object.

Specifically, step S1250 is the same as step S510. For detailed descriptions, refer to the embodiment shown in FIG. 5. To avoid repetition, details are not described in this application again.

S1260: The first communication device performs normalization processing on the first time domain resource configuration information to obtain second time domain resource configuration information.

S1270: The first communication device sends the second time domain resource configuration information to the second communication device.

Specifically, step S1260 and step S1270 are the same as step S1050 and step S1060. For detailed descriptions, refer to the embodiment shown in FIG. 10. To avoid repetition, details are not described in this application again.

S1280: The first communication device sends a sensing signal to the second communication device at the plurality of sending moments.

S1290: The second communication device may sense the target object based on the sensing signal, to calculate a speed of the target object.

Specifically, step S1280 and step S1290 are the same as step S520 and step S530. For detailed descriptions, refer to the embodiment shown in FIG. 5. To avoid repetition, details are not described in this application again.

In this embodiment of this application, the second communication device may be used as the control end device. The second communication device can determine, based on a sensing requirement of a target object on which speed measurement is to be performed, a speed resolution and a maximum unambiguous speed that correspond to the target object, and send the speed resolution and the maximum unambiguous speed to the first communication device, so that the first communication device can flexibly configure first time domain resource configuration information corresponding to the target object.

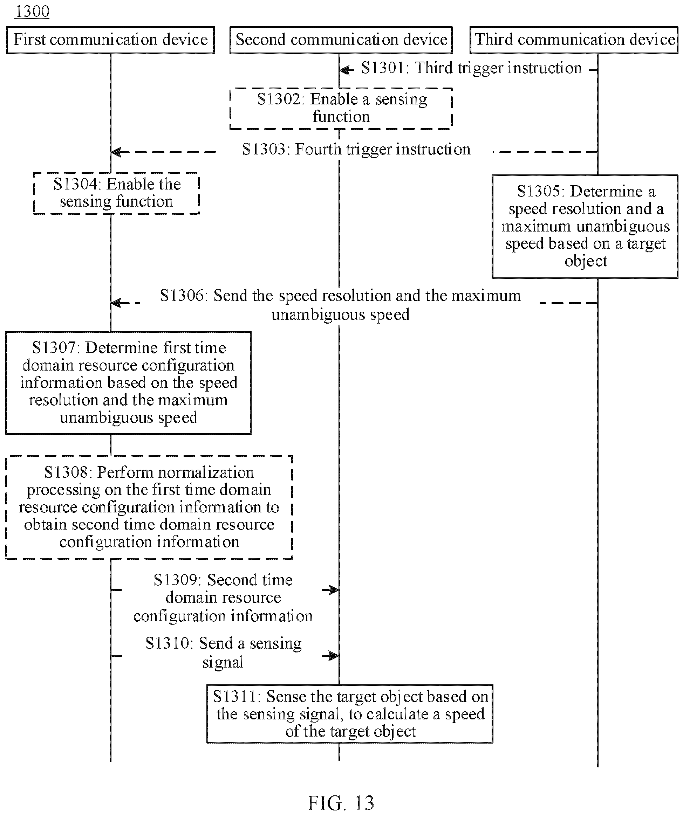

FIG. 13 is a schematic flowchart of a method 1300 for sending and receiving a sensing signal according to an embodiment of this application. The method 1300 may be applied to a communication system in which a third communication device is used as a control end device, for example, may be applied to the communication system shown in FIG. 4.

As shown in FIG. 13, the method 1300 may include the following steps.

S1301: The third communication device sends a third trigger instruction to a second communication device.

Specifically, before performing sensing and speed measurement on a target object, the third communication device, used as the control end device, may send the third trigger instruction to the second communication device, to instruct the second communication device to enable a sensing function.

S1302: The second communication device enables the sensing function.

After receiving the third trigger instruction, the second communication device enables the sensing function in response to an indication of the third trigger instruction.

S1303: The third communication device sends a fourth trigger instruction to a first communication device.

Similarly, before performing sensing and speed measurement on the target object, the third communication device, used as the control end device, may send the fourth trigger instruction to the first communication device, to instruct the first communication device to enable the sensing function.

S1304: A fourth communication device enables the sensing function.

After receiving the fourth trigger instruction, the first communication device enables the sensing function in response to an indication of the fourth trigger instruction.

It may be understood that a sequence in which the third communication device sends the third trigger instruction and sends the fourth trigger instruction is not limited in this application.

Optionally, in the method 1300, S1301 to S1304 may not be performed. In this case, the first communication device and the second communication device may preset to enable the sensing function. This is not limited in this application.

S1305: The third communication device determines a speed resolution and a maximum unambiguous speed based on the target object.

Specifically, for step S1305, refer to the related descriptions of S1030 in the embodiment shown in FIG. 10. To avoid repetition, details are not described herein again.

S1306: The third communication device sends the speed resolution and the maximum unambiguous speed to the first communication device.

S1307: The first communication device determines first time domain resource configuration information based on the speed resolution and the maximum unambiguous speed, where the first time domain resource configuration information indicates a plurality of sending moments on a time domain resource. The speed resolution and the maximum unambiguous speed are related to the target object, and the first time domain resource configuration information is in one-to-one correspondence with the target object.

Specifically, step S1307 is the same as step S510. For detailed descriptions, refer to the embodiment shown in FIG. 5. To avoid repetition, details are not described in this application again.

S1308: The first communication device performs normalization processing on the first time domain resource configuration information to obtain second time domain resource configuration information.

S1309: The first communication device sends the second time domain resource configuration information to the second communication device.

Specifically, step S1308 and step S1309 are the same as step S1050 and step S1060. For detailed descriptions, refer to the embodiment shown in FIG. 10. To avoid repetition, details are not described in this application again.

S1310: The first communication device sends a sensing signal to the second communication device at the plurality of sending moments.

S1311: The second communication device may sense the target object based on the sensing signal, to calculate a speed of the target object.

Specifically, step S1310 and step S1311 are the same as step S520 and step S530. For detailed descriptions, refer to the embodiment shown in FIG. 5. To avoid repetition, details are not described in this application again.

In this embodiment of this application, the third communication device is used as the control end device. The third communication device can determine, based on a sensing requirement of a target object on which speed measurement is to be performed, a speed resolution and a maximum unambiguous speed that correspond to the target object, and send the speed resolution and the maximum unambiguous speed to the first communication device, so that the first communication device can flexibly configure first time domain resource configuration information corresponding to the target object.

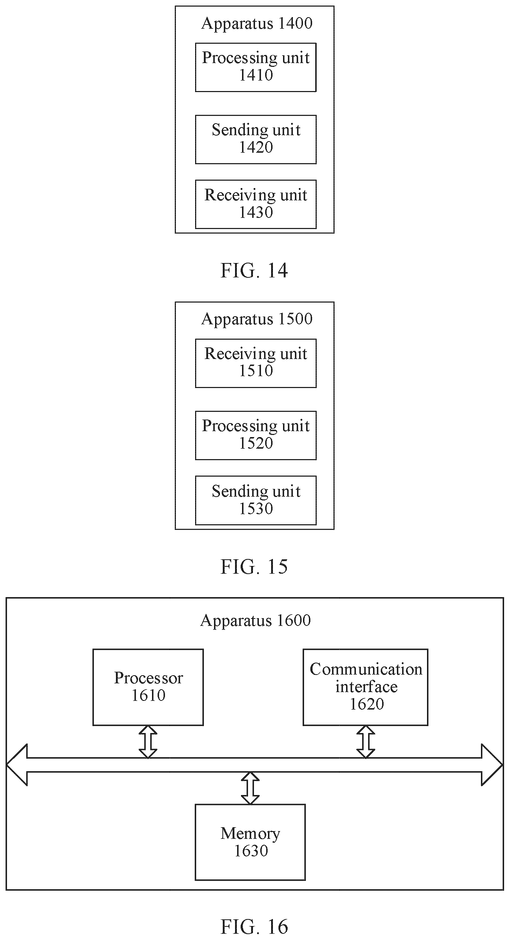

The methods provided in embodiments of this application are described above in detail with reference to FIG. 5 to FIG. 13. Apparatuses provided in embodiments of this application are described below in detail with reference to FIG. 14 to FIG. 16.

FIG. 14 is a block diagram of an apparatus 1400 for sending a sensing signal according to an embodiment of this application. The apparatus 1400 may correspond to the first communication device described in the foregoing method, or may correspond to a chip or a component of the first communication device. In addition, modules or units in the apparatus 1400 may be respectively configured to perform actions or processing processes performed by the first communication device in the foregoing method. As shown in FIG. 14, the apparatus 1400 may include a processing unit 1410 and a sending unit 1420.

The processing unit 1410 may be configured to determine first time domain resource configuration information based on a speed resolution and a maximum unambiguous speed, where the first time domain resource configuration information indicates a plurality of sending moments on a time domain resource. The sending unit 1420 may be configured to send a sensing signal at the plurality of sending moments.

Optionally, the apparatus 1400 may further include a receiving unit 1430. The receiving unit 1430 is configured to receive the speed resolution and the maximum unambiguous speed.

Optionally, the processing unit 1410 may be further configured to determine the speed resolution and the maximum unambiguous speed based on a target object.

Optionally, the processing unit 1410 may be specifically configured to determine a maximum time baseline based on the speed resolution.

Optionally, the processing unit 1410 may be further specifically configured to determine a minimum time baseline based on the maximum unambiguous speed.

In addition, the processing unit 1410 may be further specifically configured to determine the first time domain resource configuration information based on the minimum time baseline and the maximum time baseline.

Optionally, the processing unit 1410 may be further configured to perform normalization processing on the first time domain resource configuration information to obtain second time domain resource configuration information.

Optionally, the sending unit 1420 may be further configured to send the second time domain resource configuration information.

It may be understood that, for a specific process in which the units in the apparatus 1400 perform the foregoing corresponding steps, refer to the foregoing descriptions with reference to the method embodiments in FIG. 5 to FIG. 13. For brevity, details are not described herein again.

FIG. 15 is a block diagram of an apparatus 1500 for receiving a sensing signal according to an embodiment of this application. The apparatus 1500 may correspond to the second communication device described in the foregoing method, or may correspond to a chip or a component of the second communication device. In addition, modules or units in the apparatus 1500 may be respectively configured to perform actions or processing processes performed by the second communication device in the foregoing method. As shown in FIG. 15, the apparatus 1500 may include a receiving unit 1510 and a processing unit 1520.

The receiving unit 1510 may be configured to receive a sensing signal sent at a plurality of sending moments. The plurality of sending moments are moments that are on a time domain resource and that are indicated by first time domain resource configuration information.

The processing unit 1520 may be configured to: sense a target object based on the sensing signal, and calculate a speed of the target object.

Optionally, the receiving unit 1510 may be further configured to receive second time domain resource configuration information, where the second time domain resource configuration information is obtained by performing normalization processing on the first time domain resource configuration information.

Optionally, the processing unit 1520 may be further configured to determine a speed resolution and a maximum unambiguous speed based on the target object.

Optionally, the apparatus 1500 may further include a sending unit 1530. The sending unit 1530 may be configured to send the speed resolution and the maximum unambiguous speed.

It may be understood that, for a specific process in which the units in the apparatus 1500 perform the foregoing corresponding steps, refer to the foregoing descriptions with reference to the method embodiments in FIG. 5 to FIG. 13. For brevity, details are not described herein again.

The apparatus 1400 in the foregoing solutions has functions of implementing corresponding steps performed by the first communication device in the foregoing method, and the apparatus 1500 in the foregoing solutions has functions of implementing corresponding steps performed by the second communication device in the foregoing method. The functions may be implemented by hardware or software, or may be implemented by hardware executing corresponding software. The hardware or the software includes one or more modules corresponding to the foregoing functions. For example, the sending unit may be replaced with a communication interface, the receiving unit may be replaced with a communication interface, and another unit, for example, the processing unit, may be replaced with a processor, to respectively perform a sending operation, a receiving operation, and a related processing operation in the method embodiments. In embodiments of this application, a communication interface of an apparatus is used by the apparatus to communicate with another device. For example, the communication interface may be a transmitter, a receiver, a transceiver, a circuit, a bus, a module, a pin, or another type of communication interface. This is not limited in embodiments of this application.

In a specific implementation process, the processor may be configured to perform, for example, but not limited to, baseband related processing, and the communication interface may be configured to perform, for example, but not limited to, information exchange. The foregoing components may be separately disposed on chips that are independent of each other, or at least some or all of the components may be disposed on a same chip. For example, the processor may be further classified into an analog baseband processor and a digital baseband processor. The analog baseband processor and the communication interface may be integrated on a same chip, and the digital baseband processor may be disposed on an independent chip. With continuous development of an integrated circuit technology, more components may be integrated on a same chip. For example, the digital baseband processor and a plurality of application processors (for example, but not limited to, a graphics processing unit and a multimedia processor) may be integrated on a same chip. Such a chip may be referred to as a system on chip (system on chip, SOC). Whether components are independently disposed on different chips or are integrated and disposed on one or more chips usually depends on a specific requirement of a product design. Specific implementation forms of the foregoing components are not limited in embodiments of this application.

It may be understood that the processor in the foregoing embodiments may respectively implement, by executing program instructions by using a hardware platform with a processor and a communication interface, functions in any design of the processor in the foregoing embodiments of this application. Based on this, FIG. 16 is a block diagram of an apparatus 1600 according to an embodiment of this application. The apparatus 1600 includes a processor 1610, a communication interface 1620, and a memory 1630. The processor 1610, the communication interface 1620, and the memory 1630 are coupled to communicate with each other. The memory 1630 is configured to store instructions. The processor 1610 is configured to execute the instructions stored in the memory 1630, to control the communication interface 1620 to send a signal and/or receive a signal. The coupling in embodiments of this application is an indirect coupling or a communication connection between apparatuses, units, or modules in an electrical form, a mechanical form, or another form, and is used for information exchange between the apparatuses, the units, or the modules.

It may be understood that the apparatus in FIG. 14 or the apparatus in FIG. 15 in embodiments of this application may be implemented by using the apparatus 1600 in FIG. 16, and may be configured to perform steps and/or procedures corresponding to a transmit end and a receive end in the foregoing method embodiments.

An embodiment of this application provides a computer program product. When the computer program product runs on a first communication device, the first communication device is enabled to perform the technical solutions in the foregoing embodiments. An implementation principle and technical effect thereof are similar to those of the foregoing method-related embodiment. Details are not described herein again.

An embodiment of this application provides a computer program product. When the computer program product runs on a second communication device, the second communication device is enabled to perform the technical solutions in the foregoing embodiments. An implementation principle and technical effect thereof are similar to those of the foregoing method-related embodiment. Details are not described herein again.

An embodiment of this application provides a readable storage medium. The readable storage medium includes instructions. When the instructions are run on a first communication device, the first communication device is enabled to perform the technical solutions in the foregoing embodiments. An implementation principle and technical effect thereof are similar. Details are not described herein again.

An embodiment of this application provides a readable storage medium. The readable storage medium includes instructions. When the instructions are run on a second communication device, the second communication device is enabled to perform the technical solutions in the foregoing embodiments. An implementation principle and technical effect thereof are similar. Details are not described herein again.

An embodiment of this application provides a chip. The chip is configured to execute instructions. When the chip runs, the technical solutions in the foregoing embodiments are performed. An implementation principle and technical effect thereof are similar. Details are not described herein again.

It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

The terms "first", "second", and the like in this application are merely used to distinguish different objects, and "first" and "second" do not limit an actual sequence or functions of objects modified by "first" and "second". Any embodiment or design solution described as "example", "for example", "such as", "optionally", or "in some implementations" in this application should not be construed as being more preferred or more advantageous than another embodiment or design solution. Exactly, use of these words is intended to present a related concept in a specific manner.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again. In embodiments of this application, without a logical contradiction, mutual reference may be made between embodiments. For example, mutual reference may be made between methods and/or terms in method embodiments, mutual reference may be made between functions and/or terms in apparatus embodiments, and mutual reference may be made between functions and/or terms in the apparatus embodiments and the method embodiments.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sensing signal sending method, comprising:

   determining, by a first communication device, first time domain resource configuration information based on a speed resolution and a maximum unambiguous speed, wherein the first time domain resource configuration information indicates a plurality of sending moments on a time domain resource, the speed resolution and the maximum unambiguous speed are related to a target object, and the first time domain resource configuration information is in one-to-one correspondence with the target object; and
   sending, by the first communication device, a sensing signal to a second communication device at the plurality of sending moments.

2. The method according to claim 1, wherein before the determining, by a first communication device, first time domain resource configuration information based on a speed resolution and a maximum unambiguous speed, the method further comprises:
   receiving, by the first communication device, the speed resolution and the maximum unambiguous speed.

3. The method according to claim 1, wherein before the determining, by a first communication device, first time domain resource configuration information based on a speed resolution and a maximum unambiguous speed, the method further comprises:
   determining, by the first communication device, the speed resolution and the maximum unambiguous speed based on the target object.

4. The method according to any one of claims 1 to 3, wherein the determining, by a first communication device, first time domain resource configuration information based on a speed resolution and a maximum unambiguous speed comprises:

   determining, by the first communication device, a maximum time baseline based on the speed resolution;
   determining, by the first communication device, a minimum time baseline based on the maximum unambiguous speed; and
   determining, by the first communication device, the first time domain resource configuration information based on the minimum time baseline and the maximum time baseline.

5. The method according to claim 4, wherein $T_i$ and $T_j$ are any two of the plurality of sending moments, a time baseline $b_{ij}=T_j-T_i$, a time baseline $b_{ji}=T_i-T_j$, $b_{ij}=-b_{ji}$, and i and j are integers; and

   the time baseline $b_{ij}$ and the time baseline $b_{ji}$ satisfy the following relational expression:

   $$k \times \left| b_{min} \right| = \left\{ \left| b_{ij} \right|, \left| b_{ji} \right| \right\},$$

   wherein $1 \le k \le N$, and k is an integer; and

   $$N = \frac{\left| b_{max} \right|}{\left| b_{min} \right|},$$

   wherein
   $b_{min}$ is a smaller one of the time baseline $b_{ij}$ and the time baseline $b_{ji}$, $b_{max}$ is a larger one of the time baseline $b_{ij}$ and the time baseline $b_{ji}$, and N is an integer greater than 1.

6. The method according to any one of claims 1 to 5, wherein time intervals between any two adjacent sending moments in the plurality of sending moments are not completely the same.

7. The method according to any one of claims 1 to 6, wherein before the sending, by the first communication device, a sensing signal at the plurality of sending moments, the method further comprises:

performing, by the first communication device, normalization processing on the first time domain resource configuration information to obtain second time domain resource configuration information; and

sending, by the first communication device, the second time domain resource configuration information to the second communication device.

8. A sensing signal receiving method, comprising:

receiving, by a second communication device, a sensing signal sent by a first communication device at a plurality of sending moments, wherein the plurality of sending moments are moments that are on a time domain resource and that are indicated by first time domain resource configuration information, the first time domain resource configuration information is determined based on a speed resolution and a maximum unambiguous speed that are related to a target object, and the first time domain resource configuration information is in one-to-one correspondence with the target object; and

sensing, by the second communication device, the target object based on the sensing signal, and calculating a speed of the target object.

9. The method according to claim 8, wherein before the receiving, by a second communication device, a sensing signal sent by a first communication device, the method further comprises:

receiving, by the second communication device, second time domain resource configuration information sent by the first communication device, wherein the second time domain resource configuration information is obtained by performing normalization processing on the first time domain resource configuration information.

10. The method according to claim 8 or 9, wherein before the receiving, by a second communication device, a sensing signal sent by a first communication device at a plurality of sending moments, the method further comprises:

determining, by the second communication device, the speed resolution and the maximum unambiguous speed based on the target object; and

sending, by the second communication device, the speed resolution and the maximum unambiguous speed to the first communication device.

11. A sensing signal sending apparatus, comprising:

a processing unit, configured to determine first time domain resource configuration information based on a speed resolution and a maximum unambiguous speed, wherein the first time domain resource configuration information indicates a plurality of sending moments on a time domain resource, the speed resolution and the maximum unambiguous speed are related to a target object, and the first time domain resource configuration information is in one-to-one correspondence with the target object; and

a sending unit, configured to send a sensing signal to a second communication device at the plurality of sending moments.

12. The apparatus according to claim 11, wherein the apparatus further comprises a receiving unit, wherein the receiving unit is configured to receive the speed resolution and the maximum unambiguous speed.

13. The apparatus according to claim 11, wherein the processing unit is further configured to:
determine the speed resolution and the maximum unambiguous speed based on the target object.

14. The apparatus according to any one of claims 11 to 13, wherein the processing unit is specifically configured to:

determine a maximum time baseline based on the speed resolution;

determine a minimum time baseline based on the maximum unambiguous speed; and

determine the first time domain resource configuration information based on the minimum time baseline and the maximum time baseline.

15. The apparatus according to claim 14, wherein $T_i$ and $T_j$ are any two of the plurality of sending moments, a time baseline $b_{ij}=T_j-T_i$, a time baseline $b_{ji}=T_i-T_j$, $b_{ij}=-b_{ji}$, and i and j are integers; and

the time baseline $b_{ij}$ and the time baseline $b_{ji}$ satisfy the following relational expression:

$$k \times \left| b_{min} \right| = \left\{ \left| b_{ij} \right|, \left| b_{ji} \right| \right\},$$

wherein $1 \le k \le N$, and k is an integer; and

$$N = \frac{\left| b_{max} \right|}{\left| b_{min} \right|},$$

wherein

$b_{min}$ is a smaller one of the time baseline $b_{ij}$ and the time baseline $b_{ji}$, $b_{max}$ is a larger one of the time baseline $b_{ij}$ and the time baseline $b_{ji}$, and N is an integer greater than 1.

16. The apparatus according to any one of claims 11 to 15, wherein time intervals between any two adjacent sending moments in the plurality of sending moments are not completely the same.

17. The apparatus according to any one of claims 11 to 16, wherein

the processing unit is further configured to perform normalization processing on the first time domain resource configuration information to obtain second time domain resource configuration information; and
the sending unit is further configured to send the second time domain resource configuration information to the second communication device.

18. A sensing signal receiving apparatus, comprising:

a receiving unit, configured to receive a sensing signal sent by a first communication device at a plurality of sending moments, wherein the plurality of sending moments are moments that are on a time domain resource and that are indicated by first time domain resource configuration information, the first time domain resource configuration information is determined based on a speed resolution and a maximum unambiguous speed that are related to a target object, and the first time domain resource configuration information is in one-to-one correspondence with the target object; and
a processing unit, configured to: sense the target object based on the sensing signal, and calculate a speed of the target object.

19. The apparatus according to claim 18, wherein the receiving unit is further configured to:
receive second time domain resource configuration information sent by the first communication device, wherein the second time domain resource configuration information is obtained by performing normalization processing on the first time domain resource configuration information.

20. The apparatus according to claim 18 or 19, wherein the apparatus further comprises a sending unit, wherein

the processing unit is further configured to determine the speed resolution and the maximum unambiguous speed based on the target object; and
the sending unit is configured to send the speed resolution and the maximum unambiguous speed to the first communication device.

21. A sensing signal sending apparatus, comprising a processor, wherein the processor is coupled to a memory, the memory is configured to store a program or instructions, and when the program or the instructions are executed by the processor, the apparatus is enabled to perform the method according to any one of claims 1 to 7.

22. A sensing signal receiving apparatus, comprising a processor, wherein the processor is coupled to a memory, the memory is configured to store a program or instructions, and when the program or the instructions are executed by the processor, the apparatus is enabled to perform the method according to any one of claims 8 to 10.

23. A computer-readable storage medium, wherein the computer-readable storage medium stores instructions, and when the instructions are run, the method according to any one of claims 1 to 7 or the method according to any one of claims 8 to 10 is implemented.

24. A computer program product, wherein when the computer program product runs on a computer, the computer is enabled to perform the method according to any one of claims 1 to 7 or the method according to any one of claims 8 to 10.

25. A chip, comprising a memory and a processor, wherein the memory is configured to store a computer program, the processor is configured to read and execute the computer program stored in the memory, and when the computer program is executed, the processor performs the method according to any one of claims 1 to 7 or the method according to any one of claims 8 to 10.

26. A communication system, comprising a first communication device and/or a second communication device, wherein the first communication device is configured to implement the method according to any one of claims 1 to 7, and the second communication device is configured to implement the method according to any one of claims 8 to 10.

FIG. 1

200

210

220

230

FIG. 2

<u>300</u>

FIG. 3

400

440

410

420

430

FIG. 4

500

| First communication device |
| --- |

| Second communication device |
| --- |

| S510: Determine first time domain resource configuration information based on a speed resolution and a maximum unambiguous speed |
| --- |

S520: Sensing signal

| S530: Sense a target object based on the sensing signal, to calculate a speed of the target object |
| --- |

FIG. 5

Time baseline

| $T_0$ | $T_1$ | $T_2$ | $T_3$ | $T_4$ | $T_5$ | $T_6$ |
| --- | --- | --- | --- | --- | --- | --- |

FIG. 6

FIG. 7

FIG. 8

FIG. 9

1000

| First communication device | | Second communication device |

S1010: First trigger instruction

S1020: Enable a sensing function

S1030: Determine a speed resolution and a maximum unambiguous speed based on a target object

S1040: Determine first time domain resource configuration information based on the speed resolution and the maximum unambiguous speed

S1050: Perform normalization processing on the first time domain resource configuration information to obtain second time domain resource configuration information

S1060: Second time domain resource configuration information

S1070: Sensing signal

S1080: Sense the target object based on the sensing signal, to calculate a speed of the target object

FIG. 10

| $T_0$ | $T_1$ | | $T_4$ | | $T_6$ |

$T_{start}$    $\Delta T_{01}$         $\Delta T_{14}$         $\Delta T_{46}$

FIG. 11

1200

| First communication device | Second communication device |

← − − − S1210: Second trigger instruction · − − − − − −

S1220: Enable a sensing function

S1230: Determine a speed resolution and a maximum unambiguous speed based on a target object

S1240: Speed resolution and maximum unambiguous speed

S1250: Determine first time domain resource configuration information based on the speed resolution and the maximum unambiguous speed

S1260: Perform normalization processing on the first time domain resource configuration information to obtain second time domain resource configuration information

S1270: Second time domain resource configuration information

S1280: Sensing signal

S1290: Sense the target object based on the sensing signal, to calculate a speed of the target object

FIG. 12

1300

```
┌─────────────────────────┐ ┌──────────────────────────┐ ┌─────────────────────────┐
│ First communication device│ │Second communication device│ │Third communication device│
└─────────────────────────┘ └──────────────────────────┘ └─────────────────────────┘
```

◄ S1301: Third trigger instruction ─

┌─ ─ ─ ─ ─ ─ ─ ─ ─ ─ ─┐
│ S1302: Enable a sensing │
│        function        │
└─ ─ ─ ─ ─ ─ ─ ─ ─ ─ ─┘

◄ ─ ─ ─ ─ ─   S1303: Fourth trigger instruction   ─ ─ ─ ─ ─ ┤

┌─ ─ ─ ─ ─ ─ ─ ─┐
│ S1304: Enable the │
│  sensing function │
└─ ─ ─ ─ ─ ─ ─ ─┘

┌─────────────────────┐
│ S1305: Determine a   │
│ speed resolution and a│
│ maximum unambiguous  │
│ speed based on a target│
│        object         │
└─────────────────────┘

◄ ─   S1306: Send the speed resolution and the maximum   ─ ─ ─ ─ ┤
           unambiguous speed

┌─────────────────────────────┐
│ S1307: Determine first time  │
│ domain resource configuration │
│ information based on the speed│
│ resolution and the maximum   │
│      unambiguous speed        │
└─────────────────────────────┘

┌─ ─ ─ ─ ─ ─ ─ ─ ─ ─ ─ ─ ─ ─ ─┐
│ S1308: Perform normalization     │
│ processing on the first time domain │
│ resource configuration information to │
│ obtain second time domain resource   │
│      configuration information        │
└─ ─ ─ ─ ─ ─ ─ ─ ─ ─ ─ ─ ─ ─ ─┘

S1309: Second time
domain resource
configuration information  ►

S1310: Send a sensing
signal  ►

┌──────────────────────────────┐
│ S1311: Sense the target object based on│
│ the sensing signal, to calculate a speed│
│      of the target object          │
└──────────────────────────────┘

FIG. 13

Apparatus 1400

Processing unit
1410

Sending unit
1420

Receiving unit
1430

FIG. 14

Apparatus 1500

Receiving unit
1510

Processing unit
1520

Sending unit
1530

FIG. 15

Apparatus 1600

Processor
1610

Communication
interface
1620

Memory
1630

FIG. 16

## INTERNATIONAL SEARCH REPORT

| International application No. |
|---|
| **PCT/CN2023/084009** |

| A. | CLASSIFICATION OF SUBJECT MATTER |
|---|---|

H04W72/04(2023.01)i

According to International Patent Classification (IPC) or to both national classification and IPC

| B. | FIELDS SEARCHED |
|---|---|

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNABS, CNTXT, CNKI, WPABS, WPABSC, CJFD, ENTXT, VEN, IEEE, 3GPP: 测量, 感知, 信号, 时刻, 发送, 最大, 速度, 分辨率, 明确, 不模糊, 时域, 资源, 目标, measurement, speed, sensing, signal, time, send, max, resolution, definite, domain, resource, target2

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113376627 A (NOKIA TECHNOLOGIES OY) 10 September 2021 (2021-09-10) description, paragraphs 67-133 | 1, 8, 11, 18, 21-26 |
| A | CN 112710998 A (NANJING HURYS INTELLIGENCE TECHNOLOGY CO., LTD.) 27 April 2021 (2021-04-27) entire document | 1-26 |
| A | CN 113945917 A (FREETECH INTELLIGENT SYSTEMS CO., LTD.) 18 January 2022 (2022-01-18) entire document | 1-26 |
| A | CN 110412557 A (BEIJING UNIVERSITY OF POSTS AND TELECOMMUNICATIONS) 05 November 2019 (2019-11-05) entire document | 1-26 |
| A | CN 114286952 A (BLACKMOR SENSOR AND ANALYSIS OF LTD. LIABILITY COMPANIES) 05 April 2022 (2022-04-05) entire document | 1-26 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 May 2023** | **28 June 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/084009**

### C. DOCUMENTS CONSIDERED TO BE RELEVANT

| Category* | Citation of document, with indication, where appropriate, of the relevant passages | Relevant to claim No. |
|---|---|---|
| A | WO 2021011472 A1 (BLACKMORE SENSORS & ANALYTICS LLC) 21 January 2021 (2021-01-21)<br>entire document | 1-26 |

Form PCT/ISA/210 (second sheet) (July 2022)

## INTERNATIONAL SEARCH REPORT
### Information on patent family members

International application No.

**PCT/CN2023/084009**

| Patent document cited in search report | | | Publication date (day/month/year) | Patent family member(s) | | | Publication date (day/month/year) |
|---|---|---|---|---|---|---|---|
| CN | 113376627 | A | 10 September 2021 | EP | 3879300 | A1 | 15 September 2021 |
| | | | | US | 2021286064 | A1 | 16 September 2021 |
| | | | | US | 11137488 | B1 | 05 October 2021 |
| CN | 112710998 | A | 27 April 2021 | None | | | |
| CN | 113945917 | A | 18 January 2022 | None | | | |
| CN | 110412557 | A | 05 November 2019 | None | | | |
| CN | 114286952 | A | 05 April 2022 | US | 2021072381 | A1 | 11 March 2021 |
| | | | | EP | 3999870 | A1 | 25 May 2022 |
| | | | | US | 10838061 | B1 | 17 November 2020 |
| | | | | CA | 3147597 | A1 | 21 January 2021 |
| WO | 2021011472 | A1 | 21 January 2021 | None | | | |

Form PCT/ISA/210 (patent family annex) (July 2022)

**REFERENCES CITED IN THE DESCRIPTION**

**Patent documents cited in the description**

- CN 202210439791